# EUROPÄISCHE PATENTSCHRIFT

(11) **EP 3 345 465 B1**
(45) Veröffentlichungstag und Bekanntmachung des Hinweises auf die Patenterteilung: **28.10.2020**
(21) Anmeldenummer: 16753306.6
(22) Anmeldetag: 05.08.2016
(51) Int. Cl.: H05K 3/34, B60R 1/08

(54) **ELEKTRISCHE KONTAKTIERUNG EINER FLÜSSIGKRISTALLANORDNUNG MIT ELEKTRISCH STEUERBARER LICHTDURCHLÄSSIGKEIT, ELEKTRISCH ABBLENDBARES RÜCKBLICKSPIEGELGLAS UND RÜCKBLICKSPIEGEL FÜR EIN FAHRZEUG**
ELECTRIC CONTACT OF A LIQUID CRYSTAL ARRANGEMENT WITH ELECTRICALLY CONTROLLABLE TRANSPARENCY, REAR VIEW MIRROR WITH ELECTRICALLY DIMMABLE REFLEXION GLASS AND REAR VIEW MIRROR FOR A VEHICLE
ARRANGEMENT CONTACT ELECTRIQUE D'UN CRISTAL LIQUIDE AVEC TRANSPARENCE ÉLECTROCOMMANDABLE, VERRE DE REFLEXION ÉLECTRIQUEMENT REGLÉ D'UN RETROVISEUR ET RETROVISEUR POUR UN VÉHICULE

(30) Priorität: 03.09.2015 DE 102015216925
(43) Veröffentlichungstag der Anmeldung: 11.07.2018
(73) Patentinhaber: Magna Mirrors Holding GmbH, 63877 Sailauf (DE)
(72) Erfinder: KREBS, Peter, 63776 Mömbris (DE); WEIMER, Helmut, 97896 Kirschfurt (DE); BROESSLER, Thorsten, 97906 Faulbach (DE)
(74) Vertreter: Völger, Silke Beatrix
(86) Internationale Anmeldenummer: PCT/EP2016/068769
(87) Internationale Veröffentlichungsnummer: WO 2017/036734

(56) Entgegenhaltungen:
- EP-A2- 1 057 693
- WO-A2-2004/098953

## Beschreibung

Die vorliegende Erfindung betrifft eine elektrische Kontaktierung eines Leiterbahnträgers und einer Flüssigkristallanordnung mit elektrisch steuerbarer Lichtdurchlässigkeit gemäß dem Oberbegriff des unabhängigen Anspruchs 1 und einen Rückblickspiegel für ein Fahrzeug gemäß dem Oberbegriff des Anspruchs 11.

Zur Vermeidung einer Blendung durch Scheinwerfer nachfolgender Fahrzeuge ist bekannt, an und/oder in Fahrzeugen Rückblickspiegel vorzusehen, die sensorgesteuert abblendbar sind.

Um ohne anfällige und aufwändige elektromechanische, die Ausrichtung des Rückblickspiegels oder des Spiegelglases verändernde Aktuatoren auszukommen ist bekannt, das Spiegelglas mit einer im Strahlengang des Lichts zur reflektierenden Oberfläche des Spiegelglases und von dieser wieder zurück angeordneten elektrochromen Beschichtung zu versehen, deren Lichtdurchlässigkeit zumindest im Bereich des kurz als sichtbares Licht bezeichneten, für das menschliche Auge sichtbaren Teils des Spektrums elektromagnetischer Wellen durch Veränderung einer an die elektrochrome Beschichtung angelegten Spannung elektrisch steuerbar ist.

Die elektrochrome Beschichtung ändert ihre Lichtdurchlässigkeit durch Anlegen einer Gleichspannung. Die Dauer dieses Vorgangs kann von einigen Sekunden bis zu mehreren Minuten betragen.

Um einer Blendung vorzubeugen ist es insbesondere bei Nachtfahrten wichtig, dass zumindest die elektrisch gesteuerte Absenkung der Lichtdurchlässigkeit möglichst schnell erfolgt.

Eine sehr schnelle, reversible Veränderung ihrer Lichtdurchlässigkeit durch Anlegen einer Spannung weisen so genannte LC-Gläser (LC: Liquid Crystal) oder PDLC-Gläser (Polymer Dispersed Liquid Crystal) auf.

LC-Gläser basieren auf einer Flüssigkristallanordnung aus einem als dünner Film zwischen zwei transparente, elektrisch leitfähige Trägermaterialien eingebrachten, flüssigem, optischem Medium, dessen Lichtdurchlässigkeit durch Anlegen einer elektrischen Spannung an das Medium veränderbar ist. Die vorzugsweise für sichtbares Licht transparenten, elektrisch leitfähigen Trägermaterialien dienen der Verbindung des flüssigen optischen Mediums mit einer Stromquelle.

Dabei sind flüssige optische Medien mit einer so genannten direkten Charakteristik bekannt, welche ihre höchste Lichtdurchlässigkeit aufweisen, wenn keine Spannung angelegt ist, und mit zunehmender angelegter Spannung eine abnehmende Lichtdurchlässigkeit aufweisen, und solche mit einer indirekten Charakteristik, mit genau entgegengesetzten Verhältnissen. Ebenfalls bekannt sind flüssige optische Medien, deren Lichtdurchlässigkeit kontinuierlich oder in einem oder mehreren diskreten Schritten so stark verringert werden kann, bis sie schließlich opak erscheinen. Darüber hinaus ist bekannt, für solche flüssige optische Medien, die durch Umpolung oder Aufschaltung und Wegnahme einer Steuerspannung zu zwei Zuständen, beispielsweise transparent und opak, anregbar sind, eine pulsweitenmodulierte Taktung vorzusehen, um durch Veränderung der Pulsweise eine zu- und abnehmende Dimmung zu verwirklichen. Geeignete flüssige optische Medien sind beispielsweise dichroische und nematische Flüssigkristalle. Der Einfachheit halber wird im Folgenden nicht mehr zwischen den verschiedenen denkbaren flüssigen optischen Medien unterschieden und stattdessen einheitlich der Begriff Flüssigkristall-Film stellvertretend für alle Ausgestaltungen des optischen Mediums verwendet, es sei denn, es ist explizit etwas anderes erwähnt.

Bei den transparenten, elektrisch leitfähigen Trägermaterialien kann es sich um starre Platten, beispielsweise elektrisch leitfähig beschichtete Glasplättchen oder aus einem elektrisch leitfähigen Material hergestellte oder elektrisch leitfähig beschichtete, transparente Plättchen handeln, wobei der Begriff Plättchen sich in erster Linie auf die Stärke beziehungsweise Dicke der Platten mit wesentlich kleinerer Dickenabmessung, als die Flächenausdehnung bezieht, oder um aus einem elektrisch leitfähigen Material hergestellte oder elektrisch leitfähig beschichtete, transparente flexible Folien. Im Folgenden wird der Einfachheit halber nicht mehr zwischen den verschiedenen denkbaren Ausgestaltungen der transparenten, elektrisch leitfähigen Trägermaterialien unterschieden und stattdessen einheitlich der Begriff elektrisch leitfähige Schicht beziehungsweise elektrisch leitfähige Schichten stellvertretend für alle Ausgestaltungen der elektrisch leitfähigen Trägermaterialien verwendet, es sei denn, es ist explizit etwas anderes erwähnt.

In einem umlaufenden Randbereich der elektrisch leitfähigen Schichten ist zwischen diesen eine Versiegelung angeordnet, um sowohl ein Austreten des Flüssigkristall-Films zu verhindern, als auch um zur Vermeidung eines Kurzschlusses zwischen den elektrisch leitfähigen Schichten einen vorgegebenen Abstand einzuhalten.

Die gesamte, die beiden elektrisch leitfähigen Schichten und den zwischen ihnen angeordneten Flüssigkristall-Film umfassende Flüssigkristallanordnung kann einseitig auf einer Flachglasscheibe angeordnet, beispielsweise aufgeklebt, oder zwischen zwei Flachglasscheiben, beispielsweise ebenfalls durch Verkleben, eingebettet sein. Die hierdurch hergestellte, in ihrer Lichtdurchlässigkeit elektrisch steuerbare Platte kann mit oder ohne Abstand vor einem eine reflektierende Oberfläche umfassenden Spiegelglas im Strahlengang des Lichts hin zur reflektierenden Oberfläche und von dieser wieder zurück angeordnet sein, um den gewünschten Effekt einer elektrisch gesteuerten Absenkung und Wiederanhebung der Lichtdurchlässigkeit in Verbindung mit einem Spiegelglas zu erhalten.

Durch DE 36 20 196 A1 ist bekannt, eine in ihrer Lichtdurchlässigkeit elektrisch steuerbare Platte bestehend aus einem zwischen zwei Glasplättchen angeordneten Flüssigkristall-Film beabstandet vor einem Spiegelglas eines Innenrückblickspiegels anzuordnen. Der Innenrückblickspiegel weist ein Gehäuse mit einem von einer Gehäuserückwand und einer Gehäuseseitenwand teilweise umschlossenen und mit einer Öffnung, durch welche hindurch das Spiegelglas sichtbar ist, versehenen Gehäuseinnenraum auf, in dem ein als gedruckter Schaltungsträger (PCB; Printed Circuit Board) mit einer aus auf diesem angeordneten und mit dessen Leiterbahnen elektrisch kontaktierten Elektronikbauteilen bestehenden elektronischen Schaltungsanordnung ausgeführter Leiterbahnträger beherbergt ist. Die elektronische Schaltungsanordnung dient der elektrischen Steuerung der Lichtdurchlässigkeit der Platte. Auf der der Öffnung zugewandten Seite des gedruckten Schaltungsträgers ist ebenfalls in dem Gehäuseinnenraum ein von einem Rahmen gehaltenes Spiegelglas untergebracht. Der Rahmen umgreift das Spiegelglas allseitig und stützt sich und das von ihm gehaltene Spiegelglas indirekt über den an der Gehäuserückwand festgelegten Leiterbahnträger und direkt an der Gehäuseseitenwand am Gehäuse ab. Der Rahmen überragt das Spiegelglas sowohl über dessen Ränder in Richtung der Gehäuseseitenwand, als auch zu der Öffnung im Gehäuse sowie zum Leiterbahnträger hin. Dem Spiegelglas ist in einem durch den Überstand des Rahmens vorgegebenen Abstand zur Öffnung hin die in ihrer Lichtdurchlässigkeit elektrisch steuerbare Platte vorgesetzt. Die zur Steuerung der Lichtdurchlässigkeit der Platte erforderliche elektrische Kontaktierung umfasst zwei an gegenüberliegenden Seiten auf der selben, dem Spiegelglas zugewandten Oberfläche des Leiterbahnträgers angeordnete Kontaktflächen, die mit entsprechenden Leiterbahnen des Leiterbahnträgers in elektrischer Verbindung stehen. Die elektrische Kontaktierung umfasst darüber hinaus korrespondierend angeordnete, beidseits der Platte von deren dem Spiegelglas zugewandter Seite her zugängliche Kontaktflächen, die mit den elektrisch leitfähigen Schichten der Flüssigkristallanordnung in elektrischer Verbindung stehen. Dabei sind die Glasplättchen der Vorder- und der Rückseite der Platte in Richtung einer gedachten Verbindungslinie zwischen den Kontaktflächen der Platte verschoben, so dass als U-förmige, den Rand der Platte umgreifende Klammern ausgeführten Kontaktflächen einmal das Glasplättchen der Vorderseite der Platte nebst der einen der beiden elektrisch leitfähigen Schichten der Flüssigkristallanordnung und an der gegenüberliegenden Seite das Glasplättchen der Rückseite der Platte nebst der anderen der beiden elektrisch leitfähigen Schichten der Flüssigkristallanordnung vom Rand der Platte her umgreifen. Schließlich umfasst die elektrische Kontaktierung innerhalb von dem den Leiterbahnträger, das Spiegelglas und die Platte voneinander beabstandenden Rahmen ausgebildeten Hülsen angeordnete Spiralfederkontakte, welche jeweils eine Kontaktfläche des Leiterbahnträgers mit einer Kontaktfläche der Platte elektrisch verbinden. Auf der dem Spiegelglas abgewandten Seite der Platte ist ein Gehäuseabschluss vorgesehen, welcher in die Öffnung eingesetzt die lagerichtige Beibehaltung der Anordnung der im Gehäuseinnenraum untergebrachten Komponenten:
- Leiterbahnträger,
- Spiegelglas,
- Rahmen und
- in ihrer Lichtdurchlässigkeit elektrisch steuerbare Platte
   sicherstellt.

Nachteilig hieran ist der erhebliche Bauraumbedarf aufgrund der für die in einem nicht unerheblichen Abstand zum Leiterbahnträger und zum Spiegelglas angeordnete, in ihrer Lichtdurchlässigkeit elektrisch steuerbare Platte erforderliche, ausgedehnte elektrischen Kontaktierung.

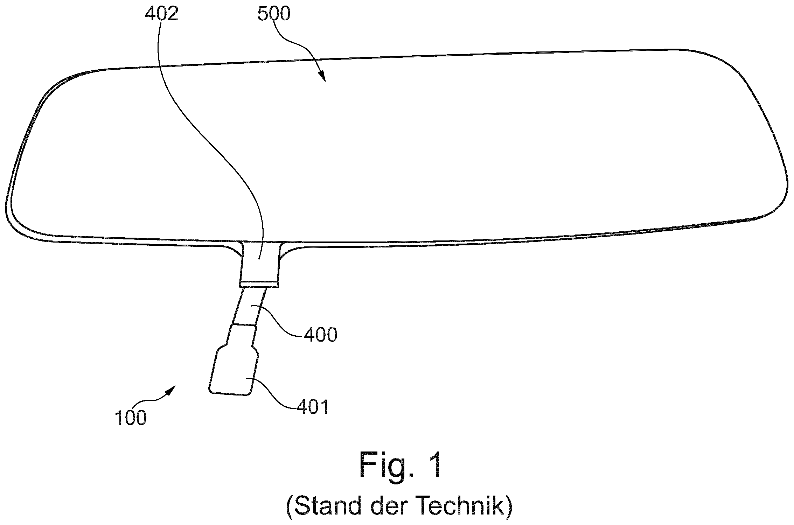

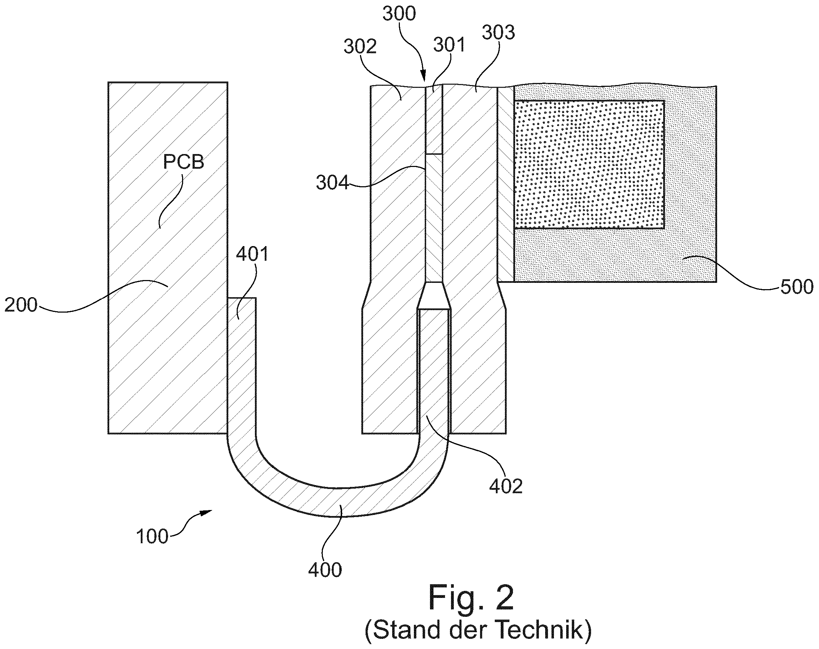

Zur Verringerung des Bauraumbedarfs ist bekannt, bei Flüssigkristallanordnungen 300, bei denen der Flüssigkristall-Film 301 zwischen zwei aus einem elektrisch leitfähigen Material hergestellten oder elektrisch leitfähig beschichteten, transparenten flexiblen Folien 302, 303 hergestellt ist, eine in Fig. 1 und Fig. 2 dargestellte elektrische Kontaktierung 100 mit einem Leiterbahnträger 200 vorzusehen, welche eine flexible Leiterbahnfolie 400 umfasst. Der Leiterbahnträger 200 kann eine aus auf diesem angeordneten und mit dessen Leiterbahnen elektrisch kontaktierten Elektronikbauteilen bestehende elektronische Schaltungsanordnung zur Steuerung der Lichtdurchlässigkeit der Flüssigkristallanordnung 300 umfassen. Alternativ kann der Leiterbahnträger 200 nur der Weitergabe eines Ausgangssignals an die Flüssigkristallanordnung 300 dienende Leiterbahnen aufweisen. Das in Form einer veränderlichen Spannung zur Steuerung der Lichtdurchlässigkeit der Flüssigkristallanordnung 300 bereitgestellte Ausgangssignal der Schaltungsanordnung steht an zwei als Kontaktflächen ausgebildeten Leiterbahnen des Leiterbahnträgers 200 zur Verfügung. Die flexible Leiterbahnfolie 400 weist mindestens zwei Leiterbahnen zur Übertragung des Ausgangssignals der Schaltungsanordnung an die Flüssigkristallanordnung 300 auf. Ein erster Abschnitt 401 der flexiblen Leiterbahnfolie 400 dient der elektrischen Verbindung ihrer Leiterbahnen mit den Kontaktflächen des Leiterbahnträgers 200. Ein zweiter Abschnitt 402 der flexiblen Leiterbahnfolie 400 dient der elektrischen Verbindung ihrer Leiterbahnen mit den elektrisch leitfähigen, transparenten flexiblen Folien 302, 303 der Flüssigkristallanordnung 300. In dem zweiten Abschnitt 402 sind solche Leiterbahnen, die mit der selben elektrisch leitfähigen, transparenten flexiblen Folie 302, 303 der Flüssigkristallanordnung 300 elektrisch zu verbinden sind, auf der selben Oberfläche der flexiblen Leiterbahnfolie 400 angeordnet. Demnach ist zumindest in dem zweiten Abschnitt 402 die mindestens eine mit der einen elektrisch leitfähigen, transparenten flexiblen Folie 302 der Flüssigkristallanordnung 300 elektrisch zu verbindende Leiterbahn auf einer ersten Oberfläche der flexiblen Leiterbahnfolie 400 vorgesehen, wohingegen die mindestens eine mit der anderen elektrisch leitfähigen, transparenten flexiblen Folie 303 der Flüssigkristallanordnung 300 elektrisch zu verbindende Leiterbahn auf einer der ersten Oberfläche gegenüberliegenden, zweiten Oberfläche der flexiblen Leiterbahnfolie 400 vorgesehen ist. Die elektrische Kontaktierung 100 zeichnet sich dadurch aus, dass der zweite Abschnitt 402 vom Rand der Flüssigkristallanordnung 300 her unter Herstellung der elektrischen Verbindungen zwischen die beiden elektrisch leitfähigen, transparenten flexiblen Folien 302, 303 eingeschoben und dort verklebt wird. Die flexible Leiterbahnfolie 400 kann unter Einhaltung eines Mindestbiegeradius beispielsweise um den Rand eines Spiegelglases 500 herum von dem Leiterbahnträger 200 zur Flüssigkristallanordnung 300 geführt werden. Die Flüssigkristallanordnung 300 kann direkt auf einem Spiegelglas 500 angeordnet, beispielsweise aufgeklebt sein. Eine der beiden elektrisch leitfähigen, transparenten flexiblen Folien 302 kann die reflektierende Oberfläche des Spiegelglases bilden oder umfassen, beispielsweise durch eine elektrisch leitfähige und zugleich reflektierende Beschichtung 304.

Nachteilig hieran ist der für die Einhaltung des Mindestbiegeradius der flexiblen Leiterbahnfolie erforderliche Bauraumbedarf und der hohe Herstellungskosten nach sich ziehende Montageaufwand für das Einführen und Einkleben des zweiten Abschnitts der flexiblen Leiterbahnfolie zwischen die elektrisch leitfähigen, flexiblen Folien der Flüssigkristallanordnung.

Durch DE 11 2012 000 474 T5 ist für eine elektrische Kontaktierung eines als PCB ausgeführten Leiterbahnträgers bekannt, mehrere nebeneinander angeordnete, parallel zur Oberfläche des Leiterbahnträgers abstehende Kontaktstifte vorzusehen, auf die ein Gegensteckverbinder aufgeschoben werden kann. Jeder Kontaktstift ist Teil einer einstückigen Kontaktklammer mit einer Klammerpartie und dem sich hieran anschließenden Kontaktstift. Die Klammerpartie umfasst einen sich parallel zur Oberfläche des Leiterbahnträgers erstreckenden Bügel, ein sich unter einem rechten Winkel einseitig des Bügels anschließendes Verrastungsstück, sowie einer an einem dem Verrastungsstück distal gegenüberliegenden Ende des Bügels angeordneten, in dieselbe Richtung wie das Verrastungsstück abgewinkelte Verrastungsschwinge. An die Verrastungspartie schließt sich wiederum abgewinkelt der Kontaktstift an, der um die Länge der Verrastungsschwinge normal zur den Bügel einschließenden Ebene gesehen versetzt wiederum parallel zur den Bügel einschließenden Ebene absteht. Die elektrische Kontaktierung umfasst ferner am Rand des Leiterbahnträgers vorgesehene Auskerbungen für die Verrastungsschwingen der Kontaktklammern sowie um den Abstand der Verrastungsstücke von den Verrastungsschwingen versetzt angeordnete, mit den Verrastungsstücken korrespondierende Ausnehmungen. Zwischen den jeweils einer Kontaktklammer zugeordneten Auskerbungen und Ausnehmungen weist der Leiterbahnträger jeweils als Kontaktflächen für je eine Kontaktklammer vorgesehene Leiterbahnabschnitte auf. Der Bügel einer jeden Kontaktklammer quert dabei eine der jeweiligen Kontaktklammer zugeordnete Kontaktfläche. Jeder Bügel ist mit der Kontaktfläche, die er quert verlötet. Zusätzlich sind die Kontaktklammern durch ihre in die Ausnehmungen eingreifenden Verrastungsstücke, als auch ihre die Auskerbungen umgreifenden Verrastungsschwingen am Leiterbahnträger verrastet.

Durch JP 2000-182694 A ist für eine elektrische Kontaktierung eines als PCB ausgeführten Leiterbahnträgers eine Direktsteckverbindung bekannt. Im Gegensatz zu einer indirekten Steckverbindung benötigt diese keine leiterbahnträgerseitig montierte Aufnahme für ein Steckerteil. Die Direktsteckverbindung umfasst einen von einem Rand her auf den Leiterbahnträger aufschiebbaren Randkontaktstecker, welcher ein Gehäuse mit in ihrem Abstand zueinander der Dicke des Leiterbahnträgers entsprechenden Klammern aufweist und als Kontaktmittel dienende, mit weiterführenden elektrischen Leitungen verbundene oder verbindbare Kontaktschwingen beherbergt. Der Leiterbahnträger weist in einem Randbereich mehrere als Kontaktflächen ausgebildete Leiterbahnen auf, deren Anordnung mit dem Abstand zwischen den Kontaktschwingen des Randkontaktsteckers und deren Ausladung korrespondiert. Wird der Randkontaktstecker bis zu einer Endstellung vom Rande her auf den Randbereich aufgeschoben, tritt jede Kontaktschwinge mit genau einer Kontaktfläche in elektrischen Kontakt.

Durch EP 1 057 693 A2 ist eine elektrische Kontaktierung zwischen einer Flüssigkristallanordnung mit elektrisch steuerbarer Lichtdurchlässigkeit und einem Leiterbahnträger bekannt. Die Flüssigkristallanordnung umfasst einen zwischen zwei elektrisch leitfähigen Schichten angeordneten, in Abhängigkeit einer an den beiden elektrisch leitfähigen Schichten angelegten veränderlichen Spannung in seiner Lichtdurchlässigkeit elektrisch steuerbaren Flüssigkristall-Film. In einem umlaufenden Randbereich der Flüssigkristallanordnung ist eine elektrisch isolierende Versiegelung zwischen den beiden elektrisch leitfähigen Schichten angeordnet. Der Leiterbahnträger umfasst mindestens eine erste Leiterbahn und mindestens eine zweite Leiterbahn, welche einer Zurverfügungstellung der veränderlichen Spannung dienen. Jede der ersten und zweiten Leiterbahnen ist jeweils mit mindestens einer Klemme verbunden. Der Leiterbahnträger ist einseitig der Flüssigkristallanordnung angeordnet. Die Klemmen reichen bis zur Flüssigkristallanordnung. Auf einer dem Leiterbahnträger zugewandten Seite der Flüssigkristallanordnung ist ein erster, mit einer ersten Schicht der beiden elektrisch leitfähigen Schichten elektrisch verbundener Kontaktbereich ausgebildet, via welchen die erste Schicht für eine mit einer ersten Leiterbahn des Leiterbahnträgers verbundene Klammer zur Herstellung einer zur Übertragung der veränderlichen Spannung erforderlichen elektrischen Verbindung elektrisch kontaktiert ist. Ebenfalls auf der dem Leiterbahnträger zugewandten Seite der Flüssigkristallanordnung ein zweiter Kontaktbereich ausgebildet, in dem die Versiegelung und die erste elektrisch leitfähige Schicht zumindest teilweise ausgespart sind, so dass via des zweiten Kontaktbereichs die zweite Schicht der beiden elektrisch leitfähigen Schichten für eine mit einer zweiten Leiterbahn des Leiterbahnträgers verbundene Klemme zur Herstellung einer zur Übertragung der veränderlichen Spannung erforderlichen elektrischen Verbindung elektrisch kontaktiert ist. Die Kontaktbereiche sind nur während der Herstellung frei zugänglich, da die Versiegelung nachträglich aufgebracht wird und zugleich Klebemasse für eine rückseitig zum Leiterbahnträger hin aufgebrachte Schutzplatte ist.

Durch WO 2004/098953 A2 ist bekannt, elektrisch leitfähige Schichten zur Steuerung einer elektrochromatischen Schicht 126 von deren Rändern her zu kontaktieren. Eine nichtleitende Linie trennt hierbei einen Randbereich einer elektrisch leitenden Schicht von einer gegenüberliegend kontaktierten Partie.

Eine Aufgabe der Erfindung ist es, eine elektrische Kontaktierung zwischen einer in ihrer Lichtdurchlässigkeit elektrisch steuerbaren Flüssigkristallanordnung und einem Leiterbahnträger zu entwickeln, welche bei gleichzeitig geringem Bauraumbedarf einfach und sicher zu montieren und damit kostengünstig herstellbar ist. Ferner ist es eine Aufgabe der Erfindung, einen Rückblickspiegel mit einem vermittels einer in ihrer Lichtdurchlässigkeit elektrisch steuerbaren Flüssigkristallanordnung elektrisch abblendbaren Spiegelglas zu entwickeln, welcher bei gleichzeitig geringem Bauraumbedarf einfach und sicher zu montieren und damit kostengünstig herstellbar ist.

Ein erster Gegenstand der Erfindung betrifft demnach eine elektrische Kontaktierung zwischen einer in ihrer Lichtdurchlässigkeit elektrisch steuerbaren Flüssigkristallanordnung und einem Leiterbahnträger.

Die Flüssigkristallanordnung umfasst einen zwischen zwei elektrisch leitfähigen Schichten angeordneten Flüssigkristall-Film. Der Flüssigkristall-Film ist durch Veränderung einer an den beiden elektrisch leitfähigen Schichten angelegten Spannung in seiner Lichtdurchlässigkeit elektrisch steuerbar. In einem umlaufenden Randbereich der Flüssigkristallanordnung ist eine elektrisch isolierende Versiegelung zwischen den beiden elektrisch leitfähigen Schichten angeordnet.

Der Leiterbahnträger umfasst mindestens zwei Leiterbahnen. Bei diesen mindestens zwei Leiterbahnen handelt es sich um mindestens eine erste Leiterbahn und mindestens eine zweite Leiterbahn. Die in der Summe mindestens zwei ersten und zweiten Leiterbahnen dienen einer Zurverfügungstellung einer veränderlichen Spannung zur Steuerung der Lichtdurchlässigkeit des Flüssigkristall-Films und dadurch der Lichtdurchlässigkeit der Flüssigkristallanordnung.

Beispielsweise kann ein in Form einer veränderlichen Spannung zur Steuerung der Lichtdurchlässigkeit der Flüssigkristallanordnung bereitgestelltes Ausgangssignal einer Schaltungsanordnung an zwei Leiterbahnen des Leiterbahnträgers zur Verfügung stehen.

Jede der zur Zurverfügungstellung einer veränderlichen Spannung zur Steuerung der Lichtdurchlässigkeit der Flüssigkristallanordnung dienenden Leiterbahnen ist mit jeweils mindestens einer von dem Leiterbahnträger federelastisch abstehenden Kontaktschwinge verbunden.

Der Leiterbahnträger ist einseitig der Flüssigkristallanordnung angeordnet, wobei die Kontaktschwingen einen gegebenenfalls vorhandenen Abstand zwischen dem Leiterbahnträger und der Flüssigkristallanordnung überbrücken.

Beispielsweise können der beispielsweise als eine Leiterplatte ausgeführte Leiterbahnträger und die Flüssigkristallanordnung parallel zueinander angeordnet sein, wobei die Kontaktschwingen den Abstand zwischen dem Leiterbahnträger und der Flüssigkristallanordnung überbrücken.

Denkbar ist in dieser Konfiguration auch, dass die Flüssigkristallanordnung und der Leiterbahnträger unmittelbar aneinander angrenzen.

Auf der dem Leiterbahnträger zugewandten Seite der Flüssigkristallanordnung ist mindestens ein erster, mit einer ersten Schicht der beiden elektrisch leitfähigen Schichten elektrisch verbundener Kontaktbereich ausgebildet.

Der erste Kontaktbereich kann durch die erste elektrisch leitfähige Schicht selbst gebildet sein, oder durch ein auf dieser angeordnetes und/oder mit dieser elektrisch verbundenes Kontaktmittel. Mindestens ein erster Kontaktbereich kann in dem Randbereich vorgesehen sein.

Vermittels des ersten Kontaktbereichs ist die erste Schicht der beiden elektrisch leitfähigen Schichten der Flüssigkristallanordnung für eine mit einer ersten Leiterbahn des Leiterbahnträgers verbundene Kontaktschwinge zur Herstellung einer zur Übertragung der zur Steuerung der Lichtdurchlässigkeit der Flüssigkristallanordnung dienenden veränderlichen Spannung erforderlichen elektrischen Verbindung zwischen einer ersten Leiterbahn des Leiterbahnträgers und der Flüssigkristallanordnung elektrisch kontaktierbar, beispielsweise zugänglich.

Ebenfalls auf der dem Leiterbahnträger zugewandten Seite der Flüssigkristallanordnung ist in dem Randbereich mindestens ein zweiter Kontaktbereich ausgebildet, wobei zumindest ein Teil der ersten elektrisch leitfähigen Schicht und der Versiegelung in dem zweiten Kontaktbereich ausgespart sind. Im Falle einer vollständigen Aussparung der ersten elektrisch leitfähigen Schicht und der Versiegelung in dem zweiten Kontaktbereich ist durch die Aussparung eine verbleibende zweite Schicht der beiden elektrisch leitfähigen Schichten der Flüssigkristallanordnung für eine mit einer zweiten Leiterbahn des Leiterbahnträgers verbundene Kontaktschwinge zur Herstellung einer zur Übertragung der zur Steuerung der Lichtdurchlässigkeit der Flüssigkristallanordnung dienenden veränderlichen Spannung erforderlichen elektrischen Verbindung zwischen einer zweiten Leiterbahn des Leiterbahnträgers und der Flüssigkristallanordnung zugänglich. Im Falle einer nur teilweisen Aussparung der ersten elektrisch leitfähigen Schicht und einer vollständigen oder teilweisen Aussparung der Versiegelung ist die zweite Schicht via des zweiten Kontaktbereichs für eine mit einer zweiten Leiterbahn des Leiterbahnträgers verbundene Kontaktschwinge kontaktierbar. Eine denkbare Ausgestaltung der letztgenannten Ausführung ist eine Abtrennung zumindest im Sinne einer elektrischen Isolation einer Partie der ersten elektrisch leitfähigen Schicht im Kontaktbereich von der sie umgebenden verbleibenden ersten elektrisch leitfähigen Schicht. Ist die erste elektrisch leitfähige Schicht beispielsweise durch eine Beschichtung hergestellt, kann die Abtrennung der Partie der ersten elektrisch leitfähigen Schicht im Kontaktbereich beispielsweise durch eine die Partie umgebende Auslassung in der Beschichtung hergestellt sein. Die Partie kann dann zur zweiten elektrisch leitfähigen Schicht durchkontaktiert sein und/oder in unmittelbarem Kontakt mit dieser stehen, wie dies durch die Aussparung der Versiegelung hindurch möglich ist.

Der zweite Kontaktbereich kann durch die via der Aussparung in der ersten elektrisch leitfähigen Schicht und in der Versiegelung zugängliche zweite elektrisch leitfähige Schicht selbst gebildet sein, oder durch ein auf dieser angeordnetes und/oder mit dieser elektrisch verbundenes, beispielsweises durch die Aussparung hindurch reichendes Kontaktmittel. Denkbar ist auch, dass die zweite elektrisch leitfähige Schicht durch die Aussparung hindurch reicht und dort für eine mit einer zweiten Leiterbahn des Leiterbahnträgers elektrisch verbundene Kontaktschwinge direkt oder vermittels eines mit der durch die Aussparung hindurchreichenden zweiten elektrisch leitfähigen Schicht elektrisch verbundenen Kontaktmittels zugänglich ist.

Die beiden zur Zurverfügungstellung der veränderlichen Spannung vorgesehenen Leiterbahnen können zumindest abschnittsweise als Kontaktflächen ausgebildet sein, auf denen die Kontaktschwingen beispielsweise in Reflow-Löttechnik oder in THT-Löttechnik aufgelötet oder mit Hilfe eines Leitklebers durch so genanntes ACF-Bonding aufgeklebt sein können. Die Kontaktschwingen können mittels zusätzlicher Hilfsmittel am Leiterbahnträger befestigt sein, beispielsweise durch Schrauben und/oder Kleben.

Der Leiterbahnträger kann mit einer aus auf diesem angeordneten und mit dessen Leiterbahnen elektrisch kontaktierten Elektronikbauteilen bestehenden elektronischen Schaltungsanordnung ausgeführt sein, welche beispielsweise ein Ausgangssignal zur Steuerung der Lichtdurchlässigkeit der Flüssigkristallanordnung erzeugen kann. Das Ausgangssignal kann in Form der veränderlichen Spannung zwischen mindestens zwei Leiterbahnen des Leiterbahnträgers zur Verfügung gestellt werden und/oder die zwischen mindestens zwei Leiterbahnen des Leiterbahnträgers zur Verfügung gestellte, zur Steuerung der Lichtdurchlässigkeit der Flüssigkristallanordnung veränderliche Spannung regeln, beispielsweise in Form einer Proportionalität des Ausgangssignals und der veränderlichen Spannung und/oder durch Beeinflussung der Spannung einer regelbaren Stromquelle.

Alternativ oder zusätzlich kann die Schaltungsanordnung zur Unterstützung der Funktion der Steuerung der Lichtdurchlässigkeit des Flüssigkristall-Films dienen, beispielsweise indem diese einen parallel zur Flüssigkristallanordnung geschalteten Abschlusswiderstand umfasst.

Alternativ oder zusätzlich kann der Leiterbahnträger einer elektrischen Weiterverbindung mit einer in Abhängigkeit von einem zur Steuerung der Lichtdurchlässigkeit der Flüssigkristallanordnung vorgesehenen Steuersignal in Ihrer Stromstärke und/oder Spannung veränderlichen Stromquelle dienen.

Die elektrische Kontaktierung kann beispielsweise in Verbindung mit einem zwischen einem Spiegelglas und dessen reflektierender Oberfläche im Strahlengang des Lichts hin zur reflektierenden Oberfläche und von dieser wieder zurück angeordneten Flüssigkristall-Film vorteilhaft unter Verringerung des benötigten Bauraums verwendet werden. Alternativ kann die elektrische Kontaktierung auch im Zusammenhang mit einer an anderer Stelle im Strahlengang des Lichts hin zur reflektierenden Oberfläche eines Spiegelglases und von dieser wieder zurück anzuordnende Flüssigkristallanordnung an oder in einer Deck- oder Zwischenscheibe aus zumindest für sichtbares Licht transparentem Werkstoff, wie beispielsweise Glas oder PMMA vorteilhaft unter Verringerung des benötigten Bauraums verwendet werden.

Die Flüssigkristallanordnung kann auf einem Spiegelglas angeordnet sein. Der Flüssigkristall-Film ist dabei im Strahlengang des Lichts zur reflektierenden Oberfläche und von dieser wieder zurück angeordnet.

Der Flüssigkristall-Film ist damit aus Sicht eines Betrachters auf die reflektierende Oberfläche vor der reflektierenden Oberfläche des Rückblickspiegelglases angeordnet.

Bevorzugt ist die Flüssigkristallanordnung zwischen der reflektierenden Oberfläche und dem Spiegelglas angeordnet.

Wichtig ist hervorzuheben, dass sofern die reflektierende Oberfläche des Rückblickspiegelglases durch eine elektrisch leitfähige Beschichtung hergestellt ist, diese grundsätzlich als elektrisch leitfähige Schicht der Flüssigkristallanordnung vorgesehen sein kann.

Die reflektierende Oberfläche kann demnach durch die erste elektrisch leitfähige Schicht der Flüssigkristallanordnung gebildet oder von dieser umfasst sein, oder die erste elektrisch leitfähige Schicht der Flüssigkristallanordnung kann durch die reflektierende Oberfläche gebildet oder von dieser umfasst sein. Hierzu kann die erste elektrisch leitfähige Schicht der Flüssigkristallanordnung eine beispielsweise durch Bedampfung hergestellte Silberschicht umfassen.

Auf einer dem Spiegelglas abgewandten Seite der Flüssigkristallanordnung ist mindestens ein mit einer ersten Schicht der beiden elektrisch leitfähigen Schichten elektrisch verbundener erster Kontaktbereich ausgebildet.

Der erste Kontaktbereich kann durch die erste elektrisch leitfähige Schicht selbst gebildet sein, oder durch ein auf dieser angeordnetes und/oder mit dieser elektrisch verbundenes Kontaktmittel. Mindestens ein erster Kontaktbereich kann in dem Randbereich vorgesehen sein.

Via des ersten Kontaktbereichs ist die erste Schicht der beiden elektrisch leitfähigen Schichten der Flüssigkristallanordnung zur Herstellung einer zur Übertragung der zur Steuerung der Lichtdurchlässigkeit des Flüssigkristall-Films dienenden veränderlichen Spannung erforderlichen elektrischen Verbindung zugänglich.

Ebenfalls auf der dem Spiegelglas abgewandten Seite der Flüssigkristallanordnung ist in dem Randbereich der mindestens ein zweite Kontaktbereich ausgebildet, wobei die erste elektrisch leitfähige Schicht und die Versiegelung in dem zweiten Kontaktbereich zumindest teilweise ausgespart sind.

Im Falle einer vollständigen Aussparung der ersten elektrisch leitfähigen Schicht und der Versiegelung in dem zweiten Kontaktbereich ist eine verbleibende zweite Schicht der beiden elektrisch leitfähigen Schichten der Flüssigkristallanordnung zur Herstellung einer zur Übertragung der zur Steuerung der Lichtdurchlässigkeit des Flüssigkristall-Films dienenden veränderlichen Spannung erforderlichen elektrischen Verbindung durch die Aussparung der ersten elektrisch leitfähigen Schicht und der Versiegelung hindurch in dem zweiten Kontaktbereich zugänglich.

Im Falle einer nur teilweisen Aussparung der ersten elektrisch leitfähigen Schicht und einer vollständigen oder teilweisen Aussparung der Versiegelung ist die zweite Schicht via des zweiten Kontaktbereichs zur Herstellung einer zur Übertragung der zur Steuerung der Lichtdurchlässigkeit des Flüssigkristall-Films dienenden veränderlichen Spannung erforderlichen elektrischen Verbindung kontaktierbar. Eine denkbare Ausgestaltung der letztgenannten Ausführung ist eine Abtrennung zumindest im Sinne einer elektrischen Isolation einer Partie der ersten elektrisch leitfähigen Schicht im Kontaktbereich von der sie umgebenden verbleibenden ersten elektrisch leitfähigen Schicht. Ist die erste elektrisch leitfähige Schicht beispielsweise durch eine Beschichtung hergestellt, kann die Abtrennung der Partie der ersten elektrisch leitfähigen Schicht im Kontaktbereich beispielsweise durch eine die Partie umgebende Auslassung in der Beschichtung hergestellt sein. Die Partie kann dann zur zweiten elektrisch leitfähigen Schicht durchkontaktiert sein und/oder in unmittelbarem Kontakt mit dieser stehen, wie dies durch die Aussparung der Versiegelung hindurch möglich ist.

Der zweite Kontaktbereich kann durch die via der Aussparung in der ersten elektrisch leitfähigen Schicht und in der Versiegelung zugängliche zweite elektrisch leitfähige Schicht selbst gebildet sein, oder durch ein auf dieser angeordnetes und/oder mit dieser elektrisch verbundenes, beispielsweises durch die Aussparung hindurch reichendes Kontaktmittel. Denkbar ist auch, dass die zweite elektrisch leitfähige Schicht durch die Aussparung hindurch reicht und dort direkt oder vermittels eines mit der durch die Aussparung hindurchreichenden zweiten elektrisch leitfähigen Schicht elektrisch verbundenen Kontaktmittels zugänglich ist.

Ein zweiter Gegenstand der Erfindung betrifft einen Rückblickspiegel für ein Fahrzeug mit einem eine reflektierende Oberfläche und eine Flüssigkristallanordnung mit einem in seiner Lichtdurchlässigkeit elektrisch steuerbaren Flüssigkristall-Film umfassenden, elektrisch abblendbaren Rückblickspiegelglas.

Der Rückblickspiegel weist ein Gehäuse mit einem von einer Gehäuserückwand und einer Gehäuseseitenwand teilweise umschlossenen und mit einer Öffnung, durch welche hindurch das Rückblickspiegelglas sichtbar ist, versehenen Gehäuseinnenraum auf. In dem Gehäuseinnenraum sind ein Leiterbahnträger und das elektrisch abblendbare Rückblickspiegelglas beherbergt.

Das Rückblickspiegelglas ist wie ein zuvor beschriebenes, elektrisch abblendbares Rückblickspiegelglas ausgeführt.

Der Leiterbahnträger umfasst mindestens zwei Leiterbahnen, mindestens einer ersten Leiterbahn und mindestens einer zweiten Leiterbahn, welche ersten und zweiten Leiterbahnen einer Zurverfügungstellung einer veränderlichen Spannung zur Steuerung der Lichtdurchlässigkeit des Flüssigkristall-Films und dadurch der Lichtdurchlässigkeit der Flüssigkristallanordnung dienen.

Der Leiterbahnträger kann mit einer aus auf diesem angeordneten und mit dessen Leiterbahnen elektrisch kontaktierten Elektronikbauteilen bestehenden elektronischen Schaltungsanordnung ausgeführt sein, welche ein Ausgangssignal zur Steuerung der Lichtdurchlässigkeit der Flüssigkristallanordnung erzeugt. Das Ausgangssignal kann in Form der veränderlichen Spannung zwischen mindestens zwei Leiterbahnen des Leiterbahnträgers zur Verfügung gestellt werden und/oder die zwischen mindestens zwei Leiterbahnen des Leiterbahnträgers zur Verfügung gestellte, zur Steuerung der Lichtdurchlässigkeit der Flüssigkristallanordnung veränderliche Spannung regeln, beispielsweise in Form einer Proportionalität des Ausgangssignals und der veränderlichen Spannung und/oder durch Beeinflussung der Spannung einer regelbaren Stromquelle.

Alternativ oder zusätzlich kann der Leiterbahnträger einer elektrischen Weiterverbindung mit einer in Abhängigkeit von einem zur Steuerung der Lichtdurchlässigkeit der Flüssigkristallanordnung vorgesehenen Steuersignal in Ihrer Stromstärke und/oder Spannung veränderlichen Stromquelle dienen.

Der Rückblickspiegel umfasst eine elektrische Kontaktierung zwischen dem Leiterbahnträger und der Flüssigkristallanordnung des Rückblickspiegelglases.

Die elektrische Kontaktierung ist wie eine zuvor beschriebene, elektrische Kontaktierung gemäß dem ersten Gegenstand der Erfindung ausgeführt.

Der Rückblickspiegel kann als ein zur Anordnung an Fahrzeugflanken vorgesehener Außenrückblickspiegel, oder als ein zur Anordnung in einem Fahrzeuginnenraum und/oder an einer Innenseite einer Windschutzscheibe eines Fahrzeugs vorgesehener Innenrückblickspiegel ausgeführt sein.

Bei der Ausführung als Außenrückblickspiegel sind das die reflektierende Oberfläche und die Flüssigkristallanordnung mit dem in seiner Lichtdurchlässigkeit elektrisch steuerbaren Flüssigkristall-Film umfassende, elektrisch abblendbare Rückblickspiegelglas und der auf der der Öffnung im Gehäuse abgewandten Seite an diesem angeordnete Leiterbahnträger gemeinsam beweglich um mindestens zwei in mathematischem Sinne voneinander unabhängige Achsen in dem Gehäuseinnenraum schwenkbar angeordnet.

Bei der Ausführung als Innenrückblickspiegel sind das die reflektierende Oberfläche und die Flüssigkristallanordnung mit dem in seiner Lichtdurchlässigkeit elektrisch steuerbaren Flüssigkristall-Film umfassende, elektrisch abblendbare Rückblickspiegelglas und der auf der der Öffnung im Gehäuse abgewandten Seite an diesem angeordnete Leiterbahnträger bevorzugt gemeinsam fest und unbeweglich in dem Gehäuseinnenraum angeordnet.

Vorteile gegenüber dem Stand der Technik ergeben sich neben einer vollständigen Lösung der gestellten Aufgabe unter Behebung sämtlicher Nachteile des Standes der Technik unter anderem durch eine einfache und sichere Montage und Kontaktierung der Flüssigkristallanordnung bei minimalem Bauraumbedarf.

Der Rückblickspiegel erlaubt ebenso wie das Rückblickspiegelglas die Vorteile der zuvor beschriebenen elektrischen Kontaktierung, nämlich deren vorteilhafte, einfache Herstellung und deren geringen Bauraumbedarf zu nutzen.

Wichtig ist hervorzuheben, dass die erfindungsgemäße elektrische Kontaktierung einzelne Merkmale oder eine beliebige Kombination von zwei oder mehreren Merkmalen eines zuvor beschriebenen erfindungsgemäßen elektrisch abblendbaren Rückblickspiegelglases und/oder eines zuvor beschriebenen erfindungsgemäßen Rückblickspiegels aufweisen und/oder verwirklichen kann, ebenso wie das erfindungsgemäße elektrisch abblendbare Rückblickspiegelglas einzelne Merkmale oder eine beliebige Kombination von zwei oder mehreren Merkmalen einer zuvor beschriebenen erfindungsgemäßen elektrischen Kontaktierung und/oder eines zuvor beschriebenen erfindungsgemäßen Rückblickspiegels aufweisen und/oder verwirklichen kann. Darüber hinaus kann der zuvor beschriebene erfindungsgemäße Rückblickspiegel einzelne Merkmale oder eine beliebige Kombination von zwei oder mehreren Merkmalen einer zuvor beschriebenen erfindungsgemäßen elektrischen Kontaktierung und/oder eines zuvor beschriebenen erfindungsgemäßen elektrisch abblendbaren Rückblickspiegelglases aufweisen und/oder verwirklichen.

Ebenfalls wichtig ist hervorzuheben, dass die erfindungsgemäße elektrische Kontaktierung und/oder das erfindungsgemäße elektrisch abblendbare Rückblickspiegelglas und/oder der erfindungsgemäße Rückblickspiegel alternativ oder zusätzlich einzelne oder eine Kombination mehrerer einleitend in Verbindung mit dem Stand der Technik und/oder in einem oder mehreren der zum Stand der Technik erwähnten Dokumente und/oder in der nachfolgenden Beschreibung zu den in den Zeichnungen dargestellten Ausführungsbeispielen beschriebene Merkmale aufweisen können.

Ebenso wie das erfindungsgemäße elektrisch abblendbare Rückblickspiegelglas es erlaubt, die Vorteile der erfindungsgemäßen elektrischen Kontaktierung und/oder des erfindungsgemäßen Rückblickspiegels zu nutzen, erlaubt auch der erfindungsgemäße Rückblickspiegel, sämtliche Vorteile der erfindungsgemäßen elektrischen Kontaktierung und/oder des erfindungsgemäßen Rückblickspiegelglases nutzbar zu machen, genauso wie auch die erfindungsgemäße elektrische Kontaktierung es erlaubt, sämtliche Vorteile des erfindungsgemäßen elektrisch abblendbaren Rückblickspiegelglases und/oder des erfindungsgemäßen Rückblickspiegels nutzbar zu machen.

Die Erfindung und deren Vorteile werden im Nachfolgenden anhand von in den Figuren dargestellter Ausführungsbeispiele näher erläutert. Die Größenverhältnisse der einzelnen Elemente zueinander entsprechen in den Figuren nicht immer den realen Größenverhältnissen, da in den Figuren einige Formen vereinfacht und andere Formen zur besseren Veranschaulichung vergrößert im Verhältnis zu anderen Elementen dargestellt sind. Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße elektrische Kontaktierung oder das erfindungsgemäße elektrisch abblendbare Rückblickspiegelglas oder der erfindungsgemäße Rückblickspiegel ausgestaltet sein können und stellen keine abschließende Begrenzung dar. Es zeigen in schematischer Darstellung:
- Fig. 1: eine teilweise Darstellung einer eine flexible Leiterbahnfolie umfassenden elektrischen Kontaktierung eines Leiterbahnträgers und einer in ihrer Lichtdurchlässigkeit elektrisch steuerbaren Flüssigkristallanordnung eines elektrisch abblendbaren Spiegelglases nach dem Stand der Technik von der Rückseite des Spiegelglases her gesehen.
- Fig. 2: eine eine flexible Leiterbahnfolie umfassende elektrische Kontaktierung eines Leiterbahnträgers und einer in ihrer Lichtdurchlässigkeit elektrisch steuerbaren Flüssigkristallanordnung eines elektrisch abblendbaren Spiegelglases nach dem Stand der Technik in einem Querschnitt.
- Fig. 3: ein erfindungsgemäßes elektrisch abblendbares Rückblickspiegelglas von dessen Rückseite her gesehen in Fig. 3a) und eine Detailansicht der Kontaktbereiche auf der Rückseite des elektrisch abblendbaren Rückblickspiegelglases in vergrößerter Ansicht in Fig. 3b).
- Fig. 4: eine elektrische Kontaktierung eines Leiterbahnträgers und einer in ihrer Lichtdurchlässigkeit elektrisch steuerbaren Flüssigkristallanordnung eines elektrisch abblendbaren Spiegelglases in einem Querschnitt.
- Fig. 5: die elektrische Kontaktierung aus Fig. 4 in einer perspektivischen Ansicht von der Rückseite des Spiegelglases aus gesehen.
- Fig. 6: eine Detailansicht der elektrischen Kontaktierung aus Fig. 5 in einer stark vergrößerten, perspektivischen Ansicht von der Rückseite des Spiegelglases aus gesehen.
- Fig. 7: ein Schaltbild einer elektrischen Kontaktierung.
- Fig. 8: ein erstes Ausführungsbeispiel eines ersten und zweiten Kontaktbereichs einer Flüssigkristallanordnung in einer Darstellung, in der die Flüssigkristallanordnung von deren Randbereich her um die strichpunktiert dargestellte Linie aufgeklappt ist, so dass die beiden ober- und unterhalb der strichpunktierten Linie dargestellten, jeweils einen Teil des Randbereichs umfassenden Partien der elektrisch leitfähigen Schichten jeweils in einer Draufsicht aus Sicht des Flüssigkristall-Films dargestellt sind.
- Fig. 9: ein zweites Ausführungsbeispiel eines ersten und zweiten Kontaktbereichs einer Flüssigkristallanordnung in einer Darstellung, in der die Flüssigkristallanordnung von deren Randbereich her um die strichpunktiert dargestellte Linie aufgeklappt ist, so dass die beiden ober- und unterhalb der strichpunktierten Linie dargestellten, jeweils einen Teil des Randbereichs umfassenden Partien der elektrisch leitfähigen Schichten jeweils in einer Draufsicht aus Sicht des Flüssigkristall-Films dargestellt sind.

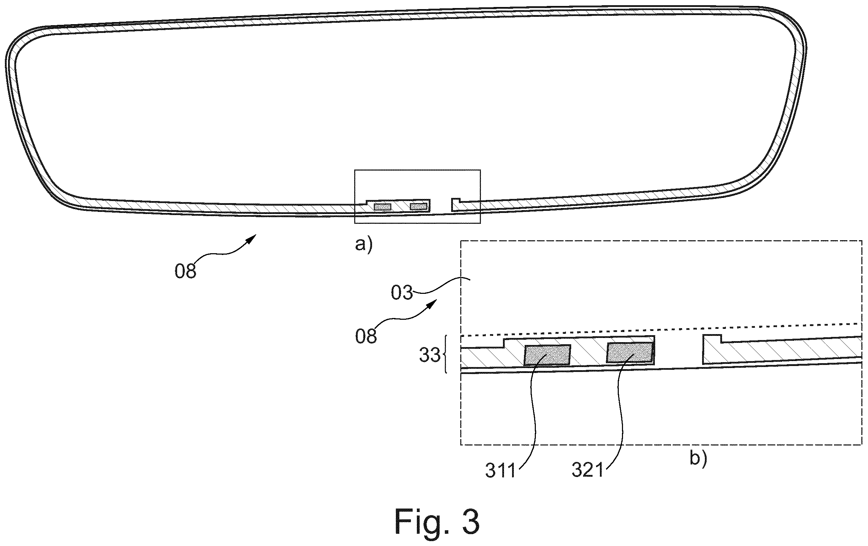

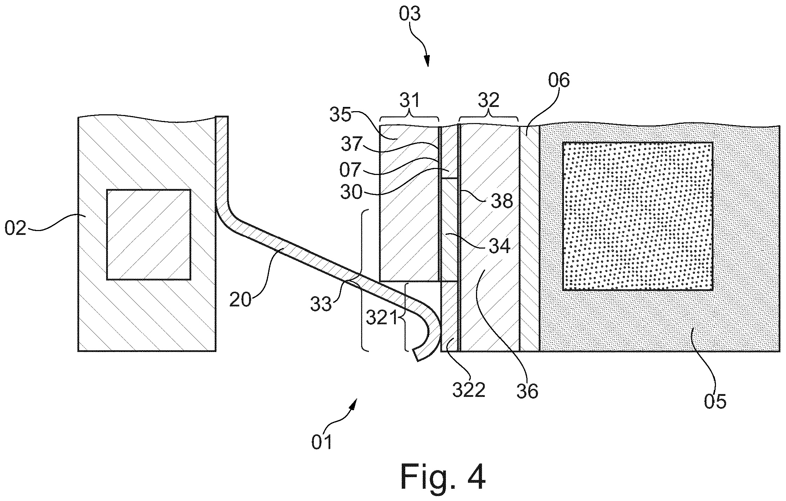

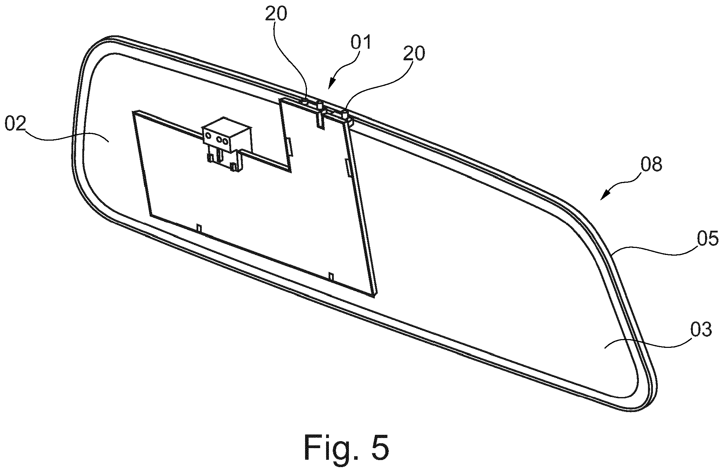

Eine in Fig. 3 bis Fig. 9 ganz oder in Teilen dargestellte elektrische Kontaktierung 01 zwischen einer Flüssigkristallanordnung 03 mit elektrisch steuerbarer Lichtdurchlässigkeit und einem Leiterbahnträger 02 umfasst im Wesentlichen:
- die Flüssigkristallanordnung 03 mit einem zwischen zwei in Fig. 4 jeweils durch eine geschweifte Klammer angedeutete, elektrisch leitfähigen Schichten 31, 32 angeordneten, in Abhängigkeit einer an den beiden elektrisch leitfähigen Schichten 31, 32 anliegenden oder angelegten oder anlegbaren veränderlichen Spannung in seiner Lichtdurchlässigkeit elektrisch steuerbaren Flüssigkristall-Film 30,
- den mindestens zwei Leiterbahnen, mindestens eine erste Leiterbahn und mindestens eine zweite Leiterbahn umfassenden Leiterbahnträger 02, dessen ersten und zweiten Leiterbahnen einer Zurverfügungstellung einer zwischen ihnen anliegenden oder anlegbaren veränderlichen Spannung zur Steuerung der Lichtdurchlässigkeit des Flüssigkristall-Films 30 und dadurch der Lichtdurchlässigkeit der Flüssigkristallanordnung 03 dienen,
- jeweils mindestens eine von dem Leiterbahnträger 02 bevorzugt federelastisch abstehende Kontaktschwinge 20 je erster und zweiter Leiterbahn, von denen jede Kontaktschwinge 20 mit einer ersten oder mit einer zweiten Leiterbahn des Leiterbahnträgers 02 elektrisch verbunden, beispielswiese verlötet ist, und
- mindestens einen ersten, mit einer ersten Schicht 31 der beiden elektrisch leitfähigen Schichten 31, 32 elektrisch verbundenen Kontaktbereich 311, via welchen ersten Kontaktbereichs 311 eine erste Schicht 31 der beiden elektrisch leitfähigen Schichten 31, 32 der Flüssigkristallanordnung 03 für mindestens eine mit einer ersten Leiterbahn des Leiterbahnträgers 02 verbundene Kontaktschwinge 20 zur Herstellung einer zur Übertragung der zur Steuerung der Lichtdurchlässigkeit der Flüssigkristallanordnung 03 dienenden veränderlichen Spannung erforderlichen elektrischen Verbindung zwischen einer ersten Leiterbahn des Leiterbahnträgers 02 und der Flüssigkristallanordnung 03 zugänglich ist, und
- mindestens einen zweiten, mit einer zweiten Schicht 32 der beiden elektrisch leitfähigen Schichten 31, 32 elektrisch verbundenen, in Fig. 4 durch eine geschweifte Klammer angedeuteten Kontaktbereich 321, so dass via des zweiten Kontaktbereichs 321 eine verbleibende zweite Schicht 32 der beiden elektrisch leitfähigen Schichten 31, 32 der Flüssigkristallanordnung 03 für mindestens eine mit einer zweiten Leiterbahn des Leiterbahnträgers 02 verbundene Kontaktschwinge 20 zur Herstellung einer zur Übertragung der zur Steuerung der Lichtdurchlässigkeit der Flüssigkristallanordnung 03 dienenden veränderlichen Spannung erforderlichen elektrischen Verbindung zwischen einer zweiten Leiterbahn des Leiterbahnträgers 02 und der Flüssigkristallanordnung 03 elektrisch kontaktierbar ist.

Der Leiterbahnträger 02 ist einseitig der Flüssigkristallanordnung 03 angeordnet. Die Kontaktschwingen 20 reichen von dem Leiterbahnträger 02 bis zur Flüssigkristallanordnung 03. Die Kontaktschwingen 20 überbrücken dabei einen gegebenenfalls vorhandenen Abstand zwischen dem Leiterbahnträger 02 und der Flüssigkristallanordnung 03.

In einem in Fig. 3 durch eine geschweifte Klammer und eine gestrichelte Linie und in Fig. 4 durch eine geschweifte Klammer angedeuteten, umlaufenden Randbereich 33 der Flüssigkristallanordnung 03 ist eine elektrisch isolierende Versiegelung 34 zwischen den beiden elektrisch leitfähigen Schichten 31, 32 angeordnet,

Der mindestens eine erste Kontaktbereich 311 ist auf der dem Leiterbahnträger 02 zugewandten Seite der Flüssigkristallanordnung 03 ausgebildet.

Der mindestens eine zweite Kontaktbereich 321 ist ebenfalls auf der dem Leiterbahnträger 02 zugewandten Seite der Flüssigkristallanordnung 03 ausgebildet.

Der mindestens eine zweite Kontaktbereich 321 ist bevorzugt in dem Randbereich 33 ausgebildet.

In dem mindestens einen zweiten Kontaktbereich 321 sind hierbei in dem Randbereich 33 die Versiegelung 34 und die erste elektrisch leitfähige Schicht 31 zumindest teilweise ausgespart, so dass via des zweiten Kontaktbereichs eine verbleibende zweite Schicht 32 der beiden elektrisch leitfähigen Schichten 31, 32 der Flüssigkristallanordnung 03 für mindestens eine mit einer zweiten Leiterbahn des Leiterbahnträgers 02 verbundene Kontaktschwinge 20 zur Herstellung einer zur Übertragung der zur Steuerung der Lichtdurchlässigkeit der Flüssigkristallanordnung 03 dienenden veränderlichen Spannung erforderlichen elektrischen Verbindung zwischen einer zweiten Leiterbahn des Leiterbahnträgers 02 und der Flüssigkristallanordnung 03 elektrisch kontaktierbar ist.

Alternativ können in dem im Randbereich 33 vorgesehenen zweiten Kontaktbereich 321 die erste elektrisch leitfähige Schicht 31 und die Versiegelung 34 vollständig ausgespart sein, wobei die zweite Schicht 31 der beiden elektrisch leitfähigen Schichten 31, 32 der Flüssigkristallanordnung 03 durch die Aussparung hindurch für mindestens eine mit einer zweiten Leiterbahn des Leiterbahnträgers 02 verbundene Kontaktschwinge 20 zur Herstellung einer zur Übertragung der zur Steuerung der Lichtdurchlässigkeit der Flüssigkristallanordnung 03 dienenden veränderlichen Spannung erforderlichen elektrischen Verbindung zwischen einer zweiten Leiterbahn des Leiterbahnträgers 02 und der Flüssigkristallanordnung 03 zugänglich ist.

Die erste elektrisch leitfähige Schicht 31 kann wie in Fig. 4 dargestellt durch eine beispielsweise transparente oder opake Folie 35 hergestellt sein, die auf ihrer dem Flüssigkristall-Film 30 zugewandten Seite mit einer elektrisch leitfähigen Beschichtung 37 versehen ist.

Die zweite elektrisch leitfähige Schicht 32 kann wie in Fig. 4 dargestellt durch eine transparente Folie 36 hergestellt sein, die auf ihrer dem Flüssigkristall-Film 30 zugewandten Seite mit einer elektrisch leitfähigen Beschichtung 38 versehen ist.

Die gesamte Flüssigkristallanordnung 03 kann unmittelbar auf einem Spiegelglas 05 angeordnet sein. Beispielsweise kann die Flüssigkristallanordnung 03 mittels einer Klebeschicht 06 unmittelbar auf das Spiegelglas 05 aufgeklebt sein. Zur Herstellung einer solchen Klebeschicht 06 eignet sich beispielsweise Phthalsäureanhydrid (PSA).

Im Falle einer unmittelbaren Anordnung der Flüssigkristallanordnung 03 auf einem Spiegelglas 05 befindet sich der Flüssigkristall-Film 30 zwischen dem Spiegelglas 05 und einer reflektierenden Oberfläche 07. Diese reflektierende Oberfläche 07 kann durch eine elektrisch leitfähige Beschichtung 37 der ersten elektrisch leitfähigen Schicht 31 gebildet sein, oder eine solche umfassen. Zur Herstellung einer sowohl elektrisch leitfähigen Beschichtung 37, als auch einer reflektierenden Oberfläche eignet sich beispielsweise Silber (AG), welches durch physikalische Gasphasenabscheidung (PVD; physical vapour deposition) oder durch Kathodenzerstäubung, so genanntes Sputtern, um ohne Anspruch auf Vollständigkeit nur zwei aus der Vielzahl der denkbaren, grundsätzlich geeigneten Beschichtungsverfahren zu nennen, auf eine in diesem Fall nicht zwingend transparente, sondern beispielsweise opak ausgeführte Folie 35 aufgebracht sein kann. Die zweite elektrisch leitfähige Schicht 32 ist in diesem Fall auf der dem Spiegelglas 05 zugewandten Seite der Flüssigkristallanordnung 03 zwischen dem Spiegelglas 05 und der durch die elektrisch leitfähige Beschichtung 37 der ersten elektrisch leitfähigen Schicht 31 gebildeten reflektierenden Oberfläche angeordnet und muss in diesem Fall daher transparent sein. Beispielsweise kann eine zweite elektrisch leitfähige Schicht 32 transparent ausgeführt sein durch Verwendung einer transparenten Folie 36, die mit einer transparenten, elektrisch leitfähigen Beschichtung 38 versehen ist. Zur Herstellung einer sowohl elektrisch leitfähigen, als auch transparenten Beschichtung 38 eignet sich beispielsweise Indiumzinnoxid (ITO). Indiumzinnoxid kann beispielsweise unter Hochvakuum mittels PVD oder Sputtern auf Substrate aufgebracht werden. Als Substrate kommen Gläser und Kunststofffolien zum Einsatz. Eine weitere Möglichkeit ist das so genannte Sol-Gel-Verfahren, das auf dünnen, aber großflächigen Schichten eingesetzt werden kann. Dabei können die Substrate getaucht, besprüht, bedruckt oder durch Aufschleudern beschichtet werden.

Ist die Flüssigkristallanordnung 03 beispielsweise wie zuvor beschrieben unmittelbar auf einem Spiegelglas 05 angeordnet, so sind vom Spiegelglas 05 aus gesehen zunächst das Spiegelglas 05, unmittelbar auf diesem die Flüssigkristallanordnung 03 mit ihrer dem Spiegelglas 05 zugewandten, zweiten elektrisch leitfähigen Schicht 32 und aus Sicht des Spiegelglases 05 hinter der Flüssigkristallanordnung 03 parallel zum Spiegelglas 05 und zu der Flüssigkristallanordnung 03 der Leiterbahnträger 02 angeordnet.

Der beispielsweise als eine Leiterplatte ausgeführte Leiterbahnträger 02 und die Flüssigkristallanordnung 03 können dabei ohne Abstand oder mit einem von den Kontaktschwingen 20 überbrückbaren Abstand parallel zueinander angeordnet sein. Die Kontaktschwingen 20 überbrücken den gegebenenfalls vorgesehenen Abstand zwischen dem Leiterbahnträger 02 und der Flüssigkristallanordnung 03. Ist kein Abstand vorgesehen und der Leiterbahnträger 02 unmittelbar auf der Flüssigkristallanordnung 03 oder unmittelbar zur Flüssigkristallanordnung benachbart angeordnet, geben die Kontaktschwingen 20 vorzugsweise federelastisch nach.

In letztgenannter Konfiguration grenzen die Flüssigkristallanordnung 03 und der Leiterbahnträger 02 unmittelbar aneinander an.

Wichtig ist in diesem Zusammenhang zu erwähnen, dass im Falle einer unmittelbaren Anordnung der Flüssigkristallanordnung 03 auf einem Spiegelglas 05 die zweite elektrisch leitfähige Schicht 32 grundsätzlich durch das elektrisch isolierend wirkende Spiegelglas 05 und eine auf dieses aufgebrachte, elektrisch leitfähige Beschichtung 38 gebildet sein kann.

Ebenfalls wichtig ist hervorzuheben, dass die gesamte Flüssigkristallanordnung 03 zwischen einem Spiegelglas 05 und einer reflektierenden Oberfläche 07 angeordnet sein kann, wie dies grundsätzlich auch aus DE 36 20 196 A1 bekannt ist, wobei in diesem Fall sowohl die erste Schicht 31 und die zweite Schicht 32 transparent ausgeführt sein müssen. Um dennoch gegenüber DE 36 20 196 A1 Bauraum einzusparen, kann hierbei die reflektierende Oberfläche 07 als entsprechende, beispielsweise aus Silber hergestellte Beschichtung auf der dem Flüssigkristall-Film 30 abgewandten Seite der ersten Schicht 31 ausgeführt sein. In diesem Fall können bei mit Beschichtungen 37, 38 versehenen transparenten Folien 35, 36 umfassenden ersten und zweiten Schichten 31, 32 beide Beschichtungen 37, 38 beispielsweise aus Indium Zinnoxid hergestellt sein.

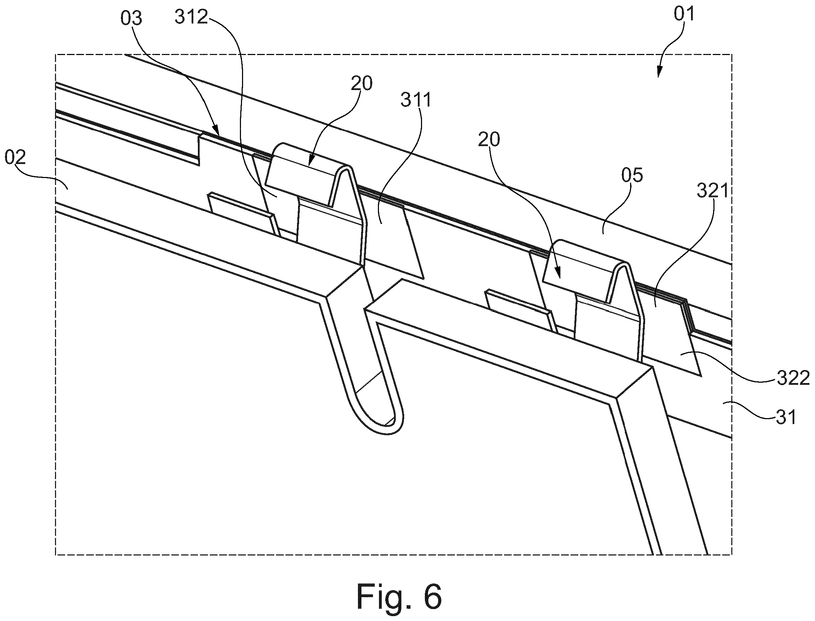

Mindestens ein erster Kontaktbereich 311 kann:
- durch die erste elektrisch leitfähige Schicht 31 selbst gebildet sein, beispielsweise durch deren im ersten Kontaktbereich 311 freiliegende elektrisch leitfähige Beschichtung 37 oder indem die erste elektrisch leitfähige Schicht 31 aus einem elektrisch leitfähigen Material hergestellt ist, oder
- durch ein auf dieser angeordnetes und/oder mit dieser elektrisch verbundenes Kontaktmittel 312 gebildet sein (Fig. 6).

In ersterem Fall, bei dem ein erster Kontaktbereich 311 durch die erste elektrisch leitfähige Schicht 31 selbst gebildet ist, kann der Kontaktbereich vorteilhaft zusätzlich mit einem leitfähigen Kleber verstärkt sein, da die leitfähigen Schichten sehr dünn sind.

Alternativ oder zusätzlich kann mindestens ein erster Kontaktbereich 311 in dem Randbereich 33 vorgesehen sein. Dies stellt eine besonders bevorzugte Ausgestaltung dar, da hierdurch der erste Kontaktbereich 311 außerhalb des beim Blick beispielsweise auf ein Rückblickspiegelglas 08 eines Rückblickspiegels sichtbaren Bereichs angeordnet ist.

Bei einer voranstehend beschriebenen elektrischen Kontaktierung 01 kann mindestens ein zweiter Kontaktbereich 321:
- durch die zweite elektrisch leitfähige Schicht 32 selbst gebildet sein, oder
- ein mit der zweiten elektrisch leitfähigen Schicht 32 elektrisch verbundenes Kontaktmittel 322 gebildet sein.

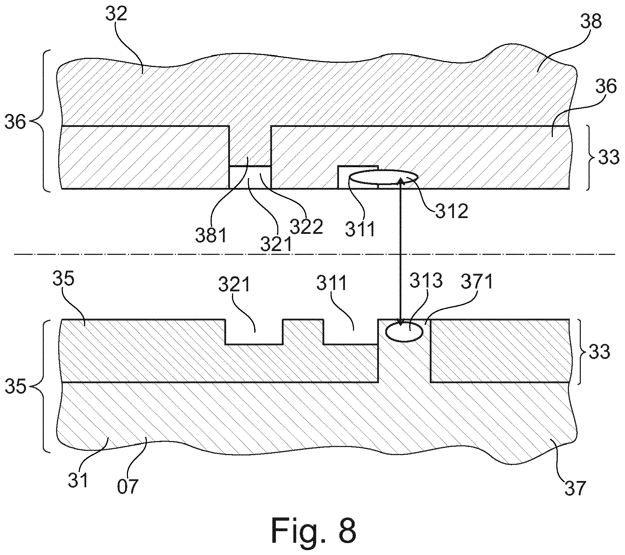

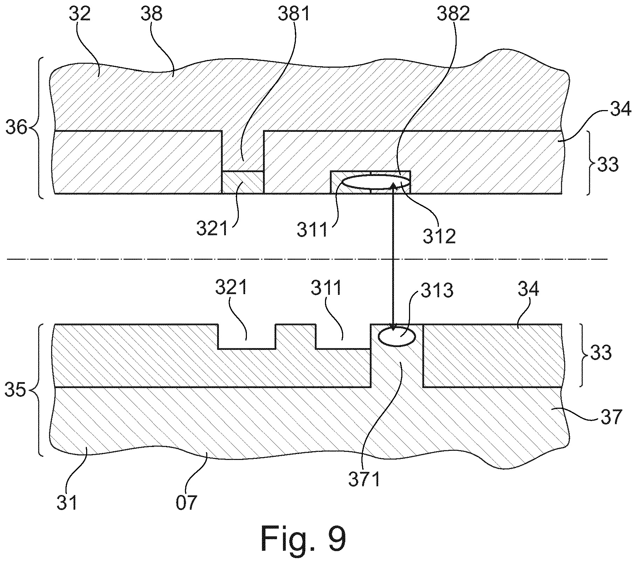

Darüber hinaus kann mindestens ein Kontaktbereich 311, 321 eine elektrisch isolierte Partie einer der elektrisch leitfähigen Schichten 31, 32 umfassen, welche mit der verbleibenden elektrisch leitfähigen Schicht 32, 31 in elektrischer Verbindung steht, wie dies beispielsweise in Fig. 9 für die von der elektrisch leitenden Beschichtung 38 der Folie 36 der zweiten elektrisch leitenden Schicht 32 getrennte Partie 382 der Fall ist, die mit der elektrisch leitfähigen Beschichtung 37 der Folie 35 der ersten elektrisch leitenden Partie in durch einen Doppelpfeil angedeuteter elektrischer Verbindung steht (Fig. 8, Fig. 9), wenn die erste elektrisch leitfähige Schicht 31 und die zweite elektrisch leitfähige Schicht 32 in zusammengebautem Zustand der Flüssigkristallanordnung 03 um die strichpunktierte Linie in Fig. 9 unter gegenseitiger Überdeckung im Randbereich 33 aufeinander geklappt sind.

Mindestens ein zweiter Kontaktbereich 321 kann beispielsweise durch die zweite elektrisch leitfähige Schicht 32 selbst gebildet sein, indem deren elektrisch leitfähige Beschichtung 38 im zweiten Kontaktbereich 321 freiliegt oder indem die zweite elektrisch leitfähige Schicht 32 aus einem elektrisch leitfähigen Material hergestellt ist. Die Beschichtung 38 oder im Falle einer aus einem elektrisch leitfähigen Material hergestellten zweiten Schicht 32 können beispielsweise durch die ganz oder teilweise ausgesparte erste elektrisch leitfähige Schicht 31 und die ausgesparte Versiegelung 34 zugänglich sein, oder durch die ganz oder teilweise ausgesparte erste elektrisch leitfähige Schicht 31 und die ausgesparte Versiegelung 34 hindurchreichen, und so entweder durch eine Aussparung im Kontaktbereich 33 hindurch oder beispielsweise auf dem Niveau der ersten Schicht 31 für eine mit einer zweiten Leiterbahn des Leiterbahnträgers 02 elektrisch verbundene Kontaktschwinge 20 zugänglich sein.

Mindestens ein zweiter Kontaktbereich 321 kann beispielsweise durch ein mit der zweiten elektrisch leitfähigen Schicht 32 elektrisch verbundenes Kontaktmittel 322 gebildet sein, welches durch die ganz oder teilweise ausgesparte erste elektrisch leitfähige Schicht 31 und die ausgesparte Versiegelung 34 zugänglich ist oder hindurchreicht und für eine mit einer zweiten Leiterbahn des Leiterbahnträgers 02 elektrisch verbundene Kontaktschwinge 20 vermittels des mit der durch eine Aussparung in der ersten Schicht und in der Versiegelung 33 hindurchreichenden zweiten elektrisch leitfähigen Schicht 32 elektrisch verbundenen oder selbst durch die Aussparung hindurchreichenden Kontaktmittels 322 zugänglich ist.

Eine von der verbleibenden ersten elektrisch leitfähigen Schicht 31 elektrisch isolierte Partie der ersten elektrisch leitfähigen Schicht 31 kann beispielsweise via des Flüssigkristall-Films 30 oder vermittels einer Durchkontaktierung oder durch unmittelbaren Kontakt mit der zweiten elektrisch leitfähigen Schicht 32 in elektrischer Verbindung stehen.

Fig. 8 und Fig. 9 zeigen weitere Ausführungsbeispiele von Ausgestaltungen des ersten Kontaktbereichs 311 und des zweiten Kontaktbereichs 321. Dabei zeigen Fig. 8 und Fig. 9 jeweils eine um die strichpunktierte Linie aufgeklappte Flüssigkristallanordnung 03, wobei in zusammengeklapptem Zustand jeweils die im Randbereich 33 liegenden Teile der elektrisch leitfähigen Schichten 31, 32 aufeinander zu liegen kommen, an den sich die verbleibenden Teile der elektrisch leitfähigen Schichten 31, 32 anschließen, zwischen denen sich in zusammengeklapptem Zustand der Flüssigkristall-Film 30 im Inneren der Flüssigkristallanordnung 03 befindet.

Im Falle einer unmittelbaren Anordnung der Flüssigkristallanordnung 03 auf einem Spiegelglas 05 ist die jeweils oberhalb der strichpunktierten Linie dargestellte zweite elektrisch leitfähige Schicht 32 der Flüssigkristallanordnung 03 dem Spiegelglas 05 zugewandt, wohingegen die jeweils unterhalb der strichpunktierten Linie dargestellte erste elektrisch leitfähige Schicht 31 der Flüssigkristallanordnung 03 dem Spiegelglas 05 abgewandt ist. In einem solchen Fall ist die zweite elektrisch leitfähige Schicht 32 jeweils in Fig. 8 und Fig. 9 seitenrichtig in einer Draufsicht auf die Rückseite des Spiegelglases 05 dargestellt, wohingegen die erste elektrisch leitfähige Schicht 31 in einer Ansicht weg von der Rückseite des Spiegelglases 05 dargestellt ist.

Bei den in Fig. 8 und Fig. 9 dargestellten Ausführungsbeispielen ist die erste elektrisch leitfähige Schicht 31 jeweils durch eine mit einer elektrisch leitfähigen Beschichtung 37, die gleichzeitig eine reflektierende Oberfläche 07 bilden kann, versehene, opake oder transparente Folie 35 gebildet, und die zweite elektrisch leitfähige Schicht 32 jeweils durch eine mit einer elektrisch leitfähigen Beschichtung 38 versehene, transparente Folie 36 gebildet.

Beim in Fig. 8 dargestellten Ausführungsbeispiel ist vorgesehen, beide Kontaktbereiche 311, 321 auf der zweiten elektrisch leitfähigen Schicht 32 auszubilden. Hierzu ist die erste elektrisch leitfähige Schicht 31 im Randbereich 33 sowohl im ersten Kontaktbereich 311, als auch im zweiten Kontaktbereich 321 jeweils ausgespart. Die elektrisch leitfähige Beschichtung 37 der ersten elektrisch leitfähigen Schicht 31 ist in dem Randbereich 33 bis auf eine benachbart zur Aussparung des ersten Kontaktbereichs 311 in den Randbereich 33 reichende Partie 371 ausgespart. Die in den Randbereich 33 reichende Partie 371 der elektrisch leitfähigen Beschichtung 37 der ersten elektrisch leitfähigen Schicht 31 kann vollständig, oder wie in Fig. 8 dargestellt teilweise beispielsweise durch einen Leitkleber oder ein anderes, geeignetes Kontaktmittel 313 verstärkt sein. In dem Randbereich 33 ist die elektrisch leitfähige Beschichtung 38 der zweiten elektrisch leitfähigen Schicht 32 bis auf eine im zweiten Kontaktbereich 321 in den Randbereich 33 reichende Partie 381 der elektrisch leitfähigen Beschichtung 38 der zweiten elektrisch leitfähigen Schicht 32 ausgespart. Im zweiten Kontaktbereich 321 kann die Partie 381 der elektrisch leitfähigen Beschichtung 38 beispielsweise durch einen Leitkleber oder ein anderes, geeignetes Kontaktmittel 322 verstärkt sein. In dem ersten Kontaktbereich 311 kann auf die Folie 36 der zweiten elektrisch leitfähigen Schicht 32 ein Leitkleber oder ein anderes, geeignetes Kontaktmittel 312 vorgesehen sein, welches jedoch in auf die zweite elektrisch leitfähige Schicht 32 um die strichpunktierte Linie geklapptem Zustand der ersten elektrisch leitfähigen Schicht 31 unter Überlappung bis zur in den Randbereich 33 reichende Partie 371 der elektrisch leitfähigen Beschichtung 37 der ersten elektrisch leitfähigen Schicht 31 beziehungsweise zum diese verstärkenden Kontaktmittel 313 reicht. In auf die zweite elektrisch leitfähige Schicht 32 um die strichpunktierte Linie geklapptem Zustand der ersten elektrisch leitfähigen Schicht 31 stehen die Kontaktmittel 312 und 313 und/oder das Kontaktmittel 312 und die Partie 371 miteinander in elektrisch leitender Verbindung, wie durch den Doppelpfeil in Fig. 8 angedeutet.

Beim in Fig. 9 dargestellten Ausführungsbeispiel ist ebenfalls vorgesehen, beide Kontaktbereiche 311, 321 auf der zweiten elektrisch leitfähigen Schicht 32 auszubilden. Auch hierbei ist vorgesehen, beide Kontaktbereiche 311, 321 in der ersten elektrisch leitfähigen Schicht 31 auszusparen. Im Gegensatz zum zuvor beschriebenen, in Fig. 8 dargestellten Ausführungsbeispiel weist jedoch die Beschichtung 38 der Folie 36 der zweiten elektrisch leitenden Schicht 32 in dem Randbereich 33 eine zusätzliche, von der verbleibenden Beschichtung 38 isolierte Partie 382 auf, welche zur Herstellung der in Fig. 9 durch einen Doppelpfeil angedeuteten elektrischen Verbindung zwischen dem auf der Folie 36 der zweiten elektrisch leitfähigen Schicht 32 ausgebildeten ersten Kontaktbereich 311 und der in den Randbereich 33 reichende Partie 371 der elektrisch leitfähigen Beschichtung 37 der ersten elektrisch leitfähigen Schicht 31 vorgesehen ist. Auch die isolierte Partie 382 kann durch einen Leitkleber oder ein anderes, geeignetes Kontaktmittel 312 verstärkt sein. Die elektrisch leitfähige Beschichtung 37 der Folie 35 der ersten elektrisch leitfähigen Schicht kann in dem Randbereich bis auf die Partie 371 und die Kontaktbereiche 311, 321, in denen ohnehin keine zur Herstellung der Beschichtung 37 notwendige Folie 35 vorhanden ist, ausgespart sein. Auf die Aussparung kann jedoch alternativ verzichtet werden, wobei in diesem Fall auf eine ausreichende Dicke der Versiegelung außerhalb der zur Herstellung der in Fig. 9 durch einen Doppelpfeil angedeuteten elektrischen Verbindung zwischen dem auf der Folie 36 der zweiten elektrisch leitfähigen Schicht 32 ausgebildeten ersten Kontaktbereich 311 und der in den Randbereich 33 reichende Partie 371 der elektrisch leitfähigen Beschichtung 37 der ersten elektrisch leitfähigen Schicht 31 vorgesehenen Überlappung geachtet werden muss.

Die zuvor beschriebene elektrische Kontaktierung 01 kann in Verbindung mit einem in Fig. 3 von dessen Rückseite her dargestellten, elektrisch abblendbaren Rückblickspiegelglas 08 mit einer reflektierenden Oberfläche 07 und einer Flüssigkristallanordnung 03 vorteilhaft verwendet werden. Der Flüssigkristall-Film 30 ist dabei aus Sicht eines Betrachters auf die reflektierende Oberfläche 07 vor der reflektierenden Oberfläche 07 angeordnet.

Bei einem solchen, in Fig. 3 bis Fig. 9 ganz oder in Teilen oder in Verbindung mit anderen Elementen dargestellten, elektrisch abblendbaren Rückblickspiegelglas 08:
- umfasst die Flüssigkristallanordnung 03 einen zwischen zwei elektrisch leitfähigen Schichten 31, 32 angeordneten und durch Veränderung einer an die beiden elektrisch leitfähigen Schichten angelegten Spannung in seiner Lichtdurchlässigkeit elektrisch steuerbaren Flüssigkristall-Film 30,
- ist in einem umlaufenden Randbereich 33 der Flüssigkristallanordnung 03 eine elektrisch isolierende Versiegelung 34 zwischen den beiden elektrisch leitfähigen Schichten 31, 32 angeordnet,
- ist die Flüssigkristallanordnung 03 unmittelbar auf einem Spiegelglas 05 angeordnet,
- ist der Flüssigkristall-Film 30 im Strahlengang des Lichts zur reflektierenden Oberfläche 07 und von dieser wieder zurück angeordnet,
- ist auf einer dem Spiegelglas 05 abgewandten Seite der Flüssigkristallanordnung 03 mindestens ein mit einer ersten Schicht 31 der beiden elektrisch leitfähigen Schichten 31, 32 elektrisch verbundener erster Kontaktbereich 311 ausgebildet,
- ist die erste Schicht 31 der beiden elektrisch leitfähigen Schichten 31, 32 der Flüssigkristallanordnung 03 via des ersten Kontaktbereichs 311 zur Herstellung einer zur Übertragung der zur Steuerung der Lichtdurchlässigkeit des Flüssigkristall-Films 30 dienenden veränderlichen Spannung erforderlichen elektrischen Verbindung kontaktierbar, beispielsweise zugänglich,
- ist auf der dem Spiegelglas 05 abgewandten Seite der Flüssigkristallanordnung 03 bevorzugt in dem Randbereich 33 mindestens ein zweiter Kontaktbereich 321 ausgebildet, in dem die Versiegelung 34 und die erste elektrisch leitfähige Schicht 31 zumindest teilweise ausgespart sind, so dass via des zweiten Kontaktbereichs 321 eine verbleibende zweite Schicht 32 der beiden elektrisch leitfähigen Schichten 31, 32 der Flüssigkristallanordnung 03 zur Herstellung einer zur Übertragung der zur Steuerung der Lichtdurchlässigkeit des Flüssigkristall-Films 30 und damit der Flüssigkristallanordnung 03 dienenden veränderlichen Spannung erforderlichen elektrischen Verbindung elektrisch kontaktierbar ist.

Die erste elektrisch leitfähige Schicht 31 und die Versiegelung 34 können in dem zweiten Kontaktbereich 321 vollständig ausgespart sein. Hierdurch ist die verbleibende zweite Schicht 32 der beiden elektrisch leitfähigen Schichten 31, 32 der Flüssigkristallanordnung 03 oder ein mit der zweiten Schicht 32 elektrisch leitend verbundenes Kontaktmittel 322 zur Herstellung einer zur Übertragung der zur Steuerung der Lichtdurchlässigkeit des Flüssigkristall-Films 30 dienenden veränderlichen Spannung erforderlichen elektrischen Verbindung durch die Aussparung der ersten elektrisch leitfähigen Schicht 31 und der Versiegelung 34 in dem zweiten Kontaktbereich 321 zugänglich.

Die Flüssigkristallanordnung 03 ist bevorzugt zwischen der reflektierenden Oberfläche 07 und dem Spiegelglas 05 angeordnet.

Wichtig ist hervorzuheben, dass sofern die reflektierende Oberfläche 07 durch eine elektrisch leitfähige Beschichtung hergestellt ist, diese grundsätzlich als elektrisch leitfähige Schicht 31, 32 der Flüssigkristallanordnung 03 vorgesehen sein kann, oder einen Teil einer elektrisch leitfähigen Schicht 31, 32 bilden kann.

Die reflektierende Oberfläche 07 kann durch die erste elektrisch leitfähige Schicht 31 der Flüssigkristallanordnung 03 gebildet oder von dieser umfasst sein, oder die erste elektrisch leitfähige Schicht 31 der Flüssigkristallanordnung 03 kann durch die reflektierende Oberfläche 07 gebildet oder von dieser umfasst sein. Hierzu kann die erste elektrisch leitfähige Schicht 31 der Flüssigkristallanordnung 03 eine beispielsweise durch Bedampfung hergestellte Beschichtung 37, beispielsweise aus Silber umfassen.

Mindestens ein erster Kontaktbereich 311 kann:
- durch die erste elektrisch leitfähige Schicht 31 selbst gebildet sein, oder
- durch ein auf dieser angeordnetes und/oder mit dieser elektrisch verbundenes Kontaktmittel 312 gebildet sein,
- und/oder in dem Randbereich 33 vorgesehen sein.

Bei dem elektrisch abblendbaren Rückblickspiegelglas 08 kann:
- mindestens ein zweiter Kontaktbereich 321 durch die zweite elektrisch leitfähige Schicht 32 selbst gebildet sein, welche durch die ganz oder teilweise ausgesparte erste elektrisch leitfähige Schicht 31 und die ganz oder teilweise ausgesparte Versiegelung 34 zugänglich ist oder durch die ganz oder teilweise ausgesparte erste elektrisch leitfähige Schicht 31 und die ausgesparte Versiegelung 34 hindurchreicht und so entweder durch die Aussparung im zweiten Kontaktbereich 321 hindurch oder beispielsweise auf dem Niveau der ersten Schicht 31 zugänglich ist, oder
- mindestens ein zweiter Kontaktbereich 321 durch ein mit der zweiten elektrisch leitfähigen Schicht 32 elektrisch verbundenes Kontaktmittel 322 gebildet sein, welches durch die ganz oder teilweise ausgesparte erste elektrisch leitfähige Schicht 31 und die ganz oder teilweise ausgesparte Versiegelung 34 zugänglich ist oder hindurchreicht,
- mindestens ein Kontaktbereich 311, 321 eine elektrisch isolierte Partie einer der elektrisch leitfähigen Schichten 31, 32 umfassen, welche mit der verbleibenden elektrisch leitfähigen Schicht 32, 31 in elektrischer Verbindung steht.

Das zuvor beschriebene elektrisch abblendbare Rückblickspiegelglas 08 kann in Verbindung mit einer vor diesem beschriebenen elektrischen Kontaktierung 01 besonders vorteilhaft unter minimalem Bauraumbedarf zur Herstellung eines Rückblickspiegels für ein Fahrzeug in ein Gehäuse eingebracht werden.

Ein solcher, in Fig. 3 bis Fig. 9 nur in Teilen oder in Details seiner Teile dargestellter Rückblickspiegel für ein Fahrzeug ist mit:
- einem eine reflektierende Oberfläche 07 und eine Flüssigkristallanordnung 03 mit einem in seiner Lichtdurchlässigkeit elektrisch steuerbaren Flüssigkristall-Film 30 umfassenden, elektrisch abblendbaren Rückblickspiegelglas 08,
- einem Gehäuse mit einem von einer Gehäuserückwand und einer Gehäuseseitenwand teilweise umschlossenen und mit einer Öffnung versehenen Gehäuseinnenraum, welcher einen Leiterbahnträger 02 sowie - durch die Öffnung hindurch sichtbar - das durch die Öffnung von außerhalb des Gehäuseinnenraums her sichtbar angeordnete, elektrisch abblendbare Rückblickspiegelglas 08 beherbergt, wobei der Leiterbahnträger 02 mindestens zwei Leiterbahnen, mindestens eine erste Leiterbahn und mindestens einer zweite Leiterbahn umfasst, welche ersten und zweiten Leiterbahnen einer Zurverfügungstellung einer veränderlichen Spannung zur Steuerung der Lichtdurchlässigkeit des Flüssigkristall-Films 30 und dadurch der Lichtdurchlässigkeit der Flüssigkristallanordnung 03 dienen, und
- einer elektrischen Kontaktierung 01 zwischen dem Leiterbahnträger 02 und der Flüssigkristallanordnung 03 des Rückblickspiegelglases 08 ausgestattet. Der Rückblickspiegel zeichnet sich wie bereits erwähnt durch ein zuvor beschriebenes elektrisch abblendbares Rückblickspiegelglas 08 in Verbindung mit einer davor beschriebenen elektrischen Kontaktierung 01 aus.

Der Leiterbahnträger 02 ist bevorzugt auf der der Öffnung abgewandten Seite des Rückblickspiegelglases 08, vorzugsweise unmittelbar benachbart und/oder bevorzugt unmittelbar angrenzend parallel zum Rückblickspiegelglas 08 beziehungsweise zu dessen Spiegelglas 05 angeordnet.

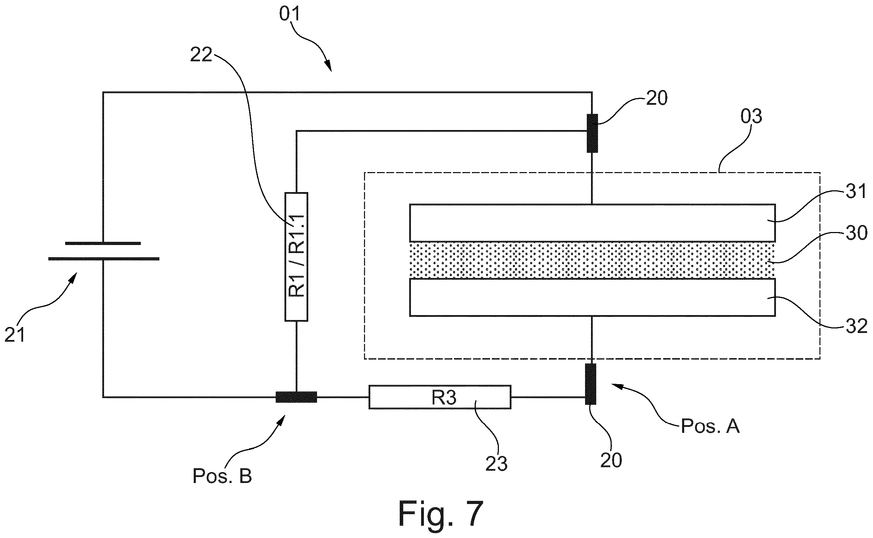

Der Leiterbahnträger 02 kann mit einer aus auf diesem angeordneten und mit dessen Leiterbahnen elektrisch kontaktierten Elektronikbauteilen bestehenden elektronischen Schaltungsanordnung ausgeführt sein, welche beispielsweise ein Ausgangssignal zur Steuerung der Lichtdurchlässigkeit des Flüssigkristall-Films 30 erzeugt und/oder zur Unterstützung der Funktion der Steuerung der Lichtdurchlässigkeit des Flüssigkristall-Films 30 dient, beispielsweise vermittels eines eine veränderliche Ausgangsspannung einer regelbaren Stromquelle 21 steuernden Steuersignals (Fig. 7).

Alternativ oder zusätzlich kann die Schaltungsanordnung zur Unterstützung der Funktion der Steuerung der Lichtdurchlässigkeit des Flüssigkristall-Films 30 dienen, beispielsweise indem diese einen parallel zur Flüssigkristallanordnung 30 geschalteten Abschlusswiderstand 22 und/oder einen Vorwiederstand 23 umfasst (Fig. 7). Ein solcher gegebenenfalls vorgesehener Vorwiderstand 23 kann alternativ in die Flüssigkristallanordnung 03 integriert sein, in diesem Fall befindet sich die Kontaktfeder 20 im Schaltbild in Fig. 7 nicht in Position A, welche dem Fall einer Integration eines Vorwiderstands 23 in einer vom Leiterbahnträger 02 umfassten Schaltungsanordnung entspricht, sondern in Position B.

Das Ausgangssignal kann in Form der veränderlichen Spannung zwischen mindestens zwei Leiterbahnen des Leiterbahnträgers 02 zur Verfügung gestellt werden und/oder die zwischen mindestens zwei Leiterbahnen des Leiterbahnträgers 02 zur Verfügung gestellte, zur Steuerung der Lichtdurchlässigkeit der Flüssigkristallanordnung 03 veränderliche Spannung regeln, beispielsweise in Form einer Proportionalität des Ausgangssignals und der veränderlichen Spannung und/oder durch Beeinflussung der Spannung einer regelbaren Stromquelle 21.

Alternativ oder zusätzlich kann der Leiterbahnträger 02 einer elektrischen Weiterverbindung mit einer in Abhängigkeit von einem zur Steuerung der Lichtdurchlässigkeit der Flüssigkristallanordnung 03 vorgesehenen Steuersignal in Ihrer Stromstärke und/oder Spannung veränderlichen Stromquelle 21 dienen.

Der Rückblickspiegel kann als ein:
- zur Anordnung an Fahrzeugflanken vorgesehener Außenrückblickspiegel, bei dem das die reflektierende Oberfläche 07 und die Flüssigkristallanordnung 03 mit dem in seiner Lichtdurchlässigkeit elektrisch steuerbaren Flüssigkristall-Film 30 umfassende, elektrisch abblendbare Rückblickspiegelglas 08 und der auf der der Öffnung im Gehäuse abgewandten Seite an diesem angeordnete Leiterbahnträger 02 gemeinsam beweglich um mindestens zwei in mathematischem Sinne voneinander unabhängige Achsen in dem Gehäuseinnenraum schwenkbar angeordnet sind, oder
- zur Anordnung in einem Fahrzeuginnenraum und/oder an einer Innenseite einer Windschutzscheibe eines Fahrzeugs vorgesehener Innenrückblickspiegel, bei dem das die reflektierende Oberfläche 07 und die Flüssigkristallanordnung 03 mit dem in seiner Lichtdurchlässigkeit elektrisch steuerbaren Flüssigkristall-Film 30 umfassende, elektrisch abblendbare Rückblickspiegelglas 08 und der auf der der Öffnung im Gehäuse abgewandten Seite angeordnete Leiterbahnträger 02 gemeinsam fest und unbeweglich in dem Gehäuseinnenraum angeordnet sind,
   ausgeführt sein.

Wichtig ist hervorzuheben, dass eine Aussparung der beispielsweise als eine reflektierende Oberfläche 07 ausgeführten elektrisch leitfähigen Beschichtung 37 nicht zwingend erforderlich ist. Zur Vermeidung eines Kurzschlusses ist jedoch die Versieglung 34 im Randbereich 33 erforderlich. Die Dicke der Versieglung 34 kann im Kontaktbereich verringert sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Elektrische Kontaktierung (01) zwischen einer Flüssigkristallanordnung (03) mit elektrisch steuerbarer Lichtdurchlässigkeit und einem Leiterbahnträger (02), wobei:
- die Flüssigkristallanordnung (03) einen zwischen zwei elektrisch leitfähigen Schichten (31, 32) angeordneten, in Abhängigkeit einer an den beiden elektrisch leitfähigen Schichten (31, 32) angelegten veränderlichen Spannung in seiner Lichtdurchlässigkeit elektrisch steuerbaren Flüssigkristall-Film (30) umfasst,
- in einem umlaufenden Randbereich (33) der Flüssigkristallanordnung (03) eine elektrisch isolierende Versiegelung (34) zwischen den beiden elektrisch leitfähigen Schichten (31, 32) angeordnet ist,
- der Leiterbahnträger (02) mindestens eine erste Leiterbahn und mindestens eine zweite Leiterbahn umfasst, welche einer Zurverfügungstellung der veränderlichen Spannung dienen,
- jede der ersten und zweiten Leiterbahnen jeweils mit mindestens einer von dem Leiterbahnträger (02) abstehenden Kontaktschwinge (20) verbunden ist,
- der Leiterbahnträger (02) einseitig der Flüssigkristallanordnung (03) angeordnet ist, wobei die Kontaktschwingen (20) von dem Leiterbahnträger (02) bis zur Flüssigkristallanordnung (03) reichen,
- auf der dem Leiterbahnträger (02) zugewandten Seite der Flüssigkristallanordnung (03) mindestens ein erster, mit einer ersten Schicht (31) der beiden elektrisch leitfähigen Schichten (31, 32) elektrisch verbundener Kontaktbereich (311) ausgebildet ist, via welchen die erste Schicht (31) für eine mit einer ersten Leiterbahn des Leiterbahnträgers (02) verbundene Kontaktschwinge (20) zur Herstellung einer zur Übertragung der veränderlichen Spannung erforderlichen elektrischen Verbindung elektrisch kontaktierbar ist, und
- auf der dem Leiterbahnträger (02) zugewandten Seite der Flüssigkristallanordnung (03) in dem Randbereich (33) mindestens ein zweiter Kontaktbereich (321) ausgebildet ist, in dem die Versiegelung (34) und die erste elektrisch leitfähige Schicht (31) zumindest teilweise ausgespart sind, so dass via des zweiten Kontaktbereichs (321) die zweite Schicht (32) der beiden elektrisch leitfähigen Schichten (31, 32) für eine mit einer zweiten Leiterbahn des Leiterbahnträgers (02) verbundene Kontaktschwinge zur Herstellung einer zur Übertragung der veränderlichen Spannung erforderlichen elektrischen Verbindung elektrisch kontaktierbar ist,
und wobei die erste elektrisch leitfähige Schicht (31) und die Versiegelung (34) in dem zweiten Kontaktbereich (321) vollständig ausgespart sind und die zweite Schicht (32) der beiden elektrisch leitfähigen Schichten (31, 32) der Flüssigkristallanordnung (03) durch die Aussparung hindurch für eine mit einer zweiten Leiterbahn des Leiterbahnträgers (02) verbundene Kontaktschwinge (20) zur Herstellung einer zur Übertragung der veränderlichen Spannung erforderlichen elektrischen Verbindung zugänglich ist.

2. Elektrische Kontaktierung nach Anspruch 1, wobei der Leiterbahnträger (02) und die Flüssigkristallanordnung (03) ohne oder mit einem von den Kontaktschwingen (20) überbrückbaren Abstand parallel zueinander angeordnet sind.

3. Elektrische Kontaktierung nach Anspruch 1 oder 2, wobei mindestens ein erster Kontaktbereich (311) in dem Randbereich (33) vorgesehen ist.

4. Elektrische Kontaktierung nach Anspruch 1, 2 oder 3, wobei mindestens ein erster Kontaktbereich (311):
- durch die erste elektrisch leitfähige Schicht (31) selbst gebildet ist, oder
- durch ein auf dieser angeordnetes und/oder mit dieser elektrisch verbundenes Kontaktmittel (312) gebildet ist.

5. Elektrische Kontaktierung nach einem der voranstehenden Ansprüche, wobei mindestens ein zweiter Kontaktbereich (321) durch die zweite elektrisch leitfähige Schicht (32) gebildet ist, welche durch die ganz oder teilweise ausgesparte erste elektrisch leitfähige Schicht (31) und die ganz oder teilweise ausgesparte Versiegelung (34) zugänglich ist oder hindurchreicht.

6. Elektrische Kontaktierung nach einem der Ansprüche 1 bis 4, wobei mindestens ein zweiter Kontaktbereich (32) durch ein mit der zweiten elektrisch leitfähigen Schicht (32) elektrisch verbundenes Kontaktmittel (322) gebildet ist, welches durch die ganz oder teilweise ausgesparte erste elektrisch leitfähige Schicht (31) und die ganz oder teilweise ausgesparte Versiegelung (34) zugänglich ist oder hindurchreicht.

7. Elektrische Kontaktierung nach einem der voranstehenden Ansprüche, wobei mindestens ein Kontaktbereich (311, 321) eine elektrisch isolierte Partie (382) einer der elektrisch leitfähigen Schichten (31, 32) umfasst, welche mit der verbleibenden elektrisch leitfähigen Schicht (32, 31) in elektrischer Verbindung steht.

8. Elektrische Kontaktierung nach einem der voranstehenden Ansprüche, wobei die Flüssigkristallanordnung (03) auf einem Spiegelglas (05) angeordnet ist.

9. Elektrische Kontaktierung nach Anspruch 5, wobei die Flüssigkristallanordnung (03) zwischen dem Spiegelglas (05) und einer reflektierenden Oberfläche (07) angeordnet ist.

10. Elektrische Kontaktierung nach Anspruch 6, wobei die reflektierende Oberfläche (07) durch eine elektrisch leitfähige Beschichtung (37) der ersten elektrisch leitfähigen Schicht (31) der Flüssigkristallanordnung (03) gebildet ist oder eine solche umfasst.

11. Rückblickspiegel für ein Fahrzeug, mit:
- einem eine reflektierende Oberfläche (07) und eine Flüssigkristallanordnung (03) mit einem in seiner Lichtdurchlässigkeit elektrisch steuerbaren Flüssigkristall-Film (30) umfassenden, elektrisch abblendbaren Rückblickspiegelglas (08),
- einem Gehäuse mit einem von einer Gehäuserückwand und einer Gehäuseseitenwand teilweise umschlossenen und mit einer Öffnung versehenen Gehäuseinnenraum, welcher einen Leiterbahnträger sowie das durch die Öffnung sichtbare Rückblickspiegelglas (08) beherbergt, wobei der Leiterbahnträger (02) mindestens eine erste Leiterbahn und mindestens einer zweite Leiterbahn umfasst, welche einer Zurverfügungstellung einer veränderlichen Spannung zur Steuerung der Lichtdurchlässigkeit des Flüssigkristall-Films (30) dienen, und
- einer elektrischen Kontaktierung (01) zwischen dem Leiterbahnträger (02) und der Flüssigkristallanordnung (03) des Rückblickspiegelglases (08),
**gekennzeichnet durch** eine elektrische Kontaktierung (01) nach einem der voranstehenden Ansprüche.

12. Rückblickspiegel nach Anspruch 11, wobei der Leiterbahnträger (02) auf der der Öffnung abgewandten Seite des Rückblickspiegelglases (08) parallel zu dessen Spiegelglas (05) angeordnet ist.

13. Rückblickspiegel nach Anspruch 11 oder 12, wobei der Leiterbahnträger (02) mit einer aus auf diesem angeordneten und mit dessen Leiterbahnen elektrisch kontaktierten Elektronikbauteilen (22, 23) bestehenden elektronischen Schaltungsanordnung ausgeführt ist.

14. Rückblickspiegel nach Anspruch 11, 12 oder 13, wobei der Rückblickspiegel als ein zur Anordnung an Fahrzeugflanken vorgesehener Außenrückblickspiegel ausgeführt ist, bei dem das elektrisch abblendbare Rückblickspiegelglas (08) und der auf der der Öffnung im Gehäuse abgewandten Seite an diesem angeordnete Leiterbahnträger (02) gemeinsam beweglich um mindestens zwei in mathematischem Sinne voneinander unabhängige Achsen in dem Gehäuseinnenraum schwenkbar angeordnet sind.

15. Rückblickspiegel nach Anspruch 11, 12 oder 13, wobei der Rückblickspiegel als ein zur Anordnung in einem Fahrzeuginnenraum und/oder an einer Innenseite einer Windschutzscheibe eines Fahrzeugs vorgesehener Innenrückblickspiegel, bei dem das elektrisch abblendbare Rückblickspiegelglas (08) und der auf der der Öffnung im Gehäuse abgewandten Seite angeordnete Leiterbahnträger (02) gemeinsam fest und unbeweglich in dem Gehäuseinnenraum angeordnet sind, ausgeführt ist.

## Claims

1. Electric contact (01) between a liquid crystal arrangement (03) with electrically controllable transparency and a conductor track carrier (02), wherein:
- the liquid crystal arrangement (03) comprises a liquid crystal film (30) arranged between two electrically conductive layers (31, 32), the transparency of said liquid crystal film being electrically controllable depending on a variable voltage applied to the two electrically conductive layers (31, 32),
- in a peripheral edge region (33) of the liquid crystal arrangement (03) an electrically insulating seal (34) is arranged between the two electrically conductive layers (31, 32),
- the conductor track carrier (02) comprises at least one first conductor track and at least one second conductor track, which serve for making the variable voltage available,
- each of the first and second conductor tracks is respectively connected to at least one contact rocker (20) projecting from the conductor track carrier (02),
- the conductor track carrier (02) is arranged on one side of the liquid crystal arrangement (03), wherein the contact rockers (20) extend from the conductor track carrier (02) as far as the liquid crystal arrangement (03),
- at least one first contact region (311) which is electrically connected to a first layer (31) of the two electrically conductive layers (31, 32) is formed on the side of the liquid crystal arrangement (03) facing the conductor track carrier (02), via which contact region the first layer (31) is electrically contactable for a contact rocker (20) connected to a first conductor track of the conductor track carrier (02) in order to produce an electrical connection required for transmitting the variable voltage, and
- at least one second contact region (321) is formed in the edge region (33) on the side of the liquid crystal arrangement (03) facing the conductor track carrier (02), in which contact region the seal (34) and the first electrically conductive layer (31) are at least partly cut out, such that via the second contact region (321) the second layer (32) of the two electrically conductive layers (31, 32) is electrically contactable for a contact rocker connected to a second conductor track of the conductor track carrier (02) in order to produce an electrical connection required for transmitting the variable voltage,
and wherein the first electrically conductive layer (31) and the seal (34) are completely cut out in the second contact region (321) and the second layer (32) of the two electrically conductive layers (31, 32) of the liquid crystal arrangement (03) is accessible through the cutout for a contact rocker (20) connected to a second conductor track of the conductor track carrier (02) in order to produce an electrical connection required for transmitting the variable voltage.

2. Electric contact according to Claim 1, wherein the conductor track carrier (02) and the liquid crystal arrangement (03) are arranged parallel to one another without or with a distance bridgeable by the contact rockers (20).

3. Electric contact according to Claim 1 or 2, wherein at least one first contact region (311) is provided in the edge region (33).

4. Electric contact according to Claim 1, 2 or 3, wherein at least one first contact region (311):
- is formed by the first electrically conductive layer (31) itself, or
- is formed by a contact means (312) arranged on the latter and/or electrically connected to the latter.

5. Electric contact according to any of the preceding claims, wherein at least one second contact region (321) is formed by the electrically conductive layer (32), which is accessible or extends through the wholly or partly cut-out first electrically conductive layer (31) and the wholly or partly cut-out seal (34).

6. Electric contact according to any of Claims 1 to 4, wherein at least one second contact region (32) is formed by a contact means (322) which is electrically connected to the second electrically conductive layer (32) and which is accessible or extends through the wholly or partly cut-out first electrically conductive layer (31) and the wholly or partly cut-out seal (34).

7. Electric contact according to any of the preceding claims, wherein at least one contact region (311, 321) comprises an electrically insulated portion (382) of one of the electrically conductive layers (31, 32), which is electrically connected to the remaining electrically conductive layer (32, 31).

8. Electric contact according to any of the preceding claims, wherein the liquid crystal arrangement (03) is arranged on a reflection glass (05).

9. Electric contact according to Claim 5, wherein the liquid crystal arrangement (03) is arranged between the reflection glass (05) and a reflective surface (07).

10. Electric contact according to Claim 6, wherein the reflective surface (07) is formed by or comprises an electrically conductive coating (37) of the first electrically conductive layer (31) of the liquid crystal arrangement (03).

11. Rear view mirror for a vehicle, comprising:
- an electrically dimmable reflection glass (08) of the rear view mirror, said electrically dimmable reflection glass comprising a reflective surface (07) and a liquid crystal arrangement (03) having a liquid crystal film (30), the transparency of which is electrically controllable,
- a housing having a housing interior that is partly enclosed by a housing rear wall and a housing side wall and is provided with an opening, said housing interior accommodating a conductor track carrier and also the reflection glass (08) of the rear view mirror, said reflection glass being visible through the opening, wherein the conductor track carrier (02) comprises at least one first conductor track and at least one second conductor track, which serve for making available a variable voltage for controlling the transparency of the liquid crystal film (30), and
- an electric contact (01) between the conductor track carrier (02) and the liquid crystal arrangement (03) of the reflection glass (08) of the rear view mirror,
**characterized by** an electric contact (01) according to any of the preceding claims.

12. Rear view mirror according to Claim 11, wherein the conductor track carrier (02) is arranged on the side of the reflection glass (08) of the rear view mirror facing away from the opening, parallel to its reflection glass (05).

13. Rear view mirror according to Claim 11 or 12, wherein the conductor track carrier (02) is embodied with an electronic circuit arrangement consisting of electronic components (22, 23) arranged on said conductor track carrier and electrically contacted with the conductor tracks thereof.

14. Rear view mirror according to Claim 11, 12 or 13, wherein the rear view mirror is embodied as an exterior rear view mirror provided for being arranged on vehicle flanks, in the case of which mirror the electrically dimmable reflection glass (08) of the rear view mirror and the conductor track carrier (02) arranged thereon on the side facing away from the opening in the housing are arranged pivotably in the housing interior in a manner jointly movable about at least two axes which are independent of one another in the mathematical sense.

15. Rear view mirror according to Claim 11, 12 or 13, wherein the rear view mirror is embodied as an interior rear view mirror provided for being arranged in a vehicle interior and/or on an inner side of a windscreen of a vehicle, in the case of which mirror the electrically dimmable reflection glass (08) of the rear view mirror and the conductor track carrier (02) arranged on the side facing away from the opening in the housing are arranged in the housing interior in a jointly fixed and non-movable manner.

## Revendications

1. Contact électrique (01) entre un dispositif à cristaux liquides (03) ayant une perméabilité à la lumière à commande électrique et un support de pistes conductrices (02), dans lequel :
- le dispositif à cristaux liquides (03) comprend un film de cristaux liquides (30) disposé entre deux couches électroconductrices (31, 32) et dont la perméabilité à la lumière peut être commandée électriquement en fonction d'une tension modifiable appliquée aux deux couches électroconductrices (31, 32),
- dans une zone marginale (33) périphérique du dispositif à cristaux liquides (03), un scellement électriquement isolant (34) est disposé entre les deux couches électroconductrices (31, 32),
- le support de pistes conductrices (02) comprend au moins une première piste conductrice et au moins une deuxième piste conductrice permettant de mettre à disposition la tension modifiable,
- chacune des première et deuxième pistes conductrices est reliée à au moins une lame de contact (20) s'écartant du support de pistes conductrices (02),
- le support de pistes conductrices (02) est disposé sur un côté du dispositif à cristaux liquides (03), dans lequel les lames de contact (20) s'étendent du support de pistes conductrices (02) jusqu'au dispositif à cristaux liquides (03),
- sur le côté du dispositif à cristaux liquides (03) qui est tourné vers le support de pistes conductrices (02) est réalisée au moins une première zone de contact (311) reliée électriquement à une première couche (31) des deux couches électroconductrices (31, 32), par l'intermédiaire de laquelle la première couche (31), pour une lame de contact (20) reliée à une première piste conductrice du support de pistes conductrices (02), peut être mise en contact électrique pour créer une liaison électrique nécessaire au transfert de la tension modifiable, et
- sur le côté du dispositif à cristaux liquides (03) qui est tourné vers le support de pistes conductrices (02), dans la zone marginale (33), est réalisée au moins une deuxième zone de contact (321) dans laquelle le scellement (34) et la première couche électroconductrice (31) sont évidés au moins partiellement, de telle sorte que, via la deuxième zone de contact (321), la deuxième couche (32) des deux couches électroconductrices (31, 32) puisse être mise en contact électrique pour une lame de contact reliée à une deuxième piste conductrice du support de pistes conductrices (02) pour créer une liaison électrique nécessaire au transfert de la tension modifiable,
et dans lequel la première couche électroconductrice (31) et le scellement (34) sont entièrement évidés dans la deuxième zone de contact (321) et la deuxième couche (32) des deux couches électroconductrices (31, 32) du dispositif à cristaux liquides (03) est accessible à travers l'évidement pour une lame de contact (20) reliée à une deuxième piste conductrice du support de pistes conductrices (02) pour créer une liaison électrique nécessaire au transfert de la tension modifiable.

2. Contact électrique selon la revendication 1, dans lequel le support de pistes conductrices (02) et le dispositif à cristaux liquides (03) sont disposés parallèlement l'un à l'autre et sans espacement ou avec un espacement qui peut être ponté par les lames de contact (20).

3. Contact électrique selon la revendication 1 ou 2, dans lequel au moins une première zone de contact (311) est prévue dans la zone marginale (33).

4. Contact électrique selon la revendication 1, 2 ou 3, dans lequel au moins une première zone de contact (311) :
- est formée par la première couche électroconductrice (31) elle-même, ou
- est formée par un moyen de contact (312) disposé sur celle-ci et/ou relié électriquement à celle-ci.

5. Contact électrique selon l'une des revendications précédentes, dans lequel au moins une deuxième surface de contact (321) est formée par la deuxième couche électroconductrice (32), qui est accessible ou passe à travers la première couche électroconductrice (31) entièrement ou partiellement évidée et le scellement (34) entièrement ou partiellement évidé.

6. Contact électrique selon l'une des revendications 1 à 4, dans lequel au moins une deuxième zone de contact (32) est formée par un moyen de contact (322) relié électriquement à la deuxième couche électroconductrice (32)
qui est accessible ou passe à travers la première couche électroconductrice entièrement ou partiellement évidée (31) et le scellement entièrement ou partiellement évidé (34).

7. Contact électrique selon l'une des revendications précédentes, dans lequel au moins une zone de contact (311, 321) comprend une partie électriquement isolée (382) de l'une des couches électroconductrices (31, 32), qui est en liaison électrique avec la couche électroconductrice (32, 31) restante.

8. Contact électrique selon l'une des revendications précédentes, dans lequel le dispositif à cristaux liquides (03) est disposé sur un verre de miroir (05).

9. Contact électrique selon la revendication 5, dans lequel le dispositif à cristaux liquides (03) est disposé entre le verre de miroir (05) et une surface réfléchissante (07).

10. Contact électrique selon la revendication 6, dans lequel la surface réfléchissante (07) est formée par ou comprend un revêtement électroconducteur (37) de la première couche électroconductrice (31) du dispositif à cristaux liquides (03).

11. Rétroviseur pour véhicule, comportant :
- un verre de rétroviseur (08) à réglage électrique, comprenant une surface réfléchissante (07) et un dispositif à cristaux liquides (03) pourvu d'un film à cristaux liquides (30) dont la perméabilité à la lumière peut être commandée électriquement,
- un boîtier comportant un espace intérieur de boîtier partiellement fermé par une paroi arrière de boîtier et une paroi latérale de boîtier et pourvu d'une ouverture, lequel boîtier accueille un support de pistes conductrices et le verre de rétroviseur (08) visible à travers l'ouverture, dans lequel le support de pistes conductrices (02) comprend au moins une première piste conductrice et au moins une deuxième piste conductrice permettant de mettre à disposition une tension modifiable pour commander la perméabilité à la lumière du film de cristaux liquides (30), et
- un contact électrique (01) entre le support de pistes conductrices (02) et le dispositif à cristaux liquides (03) du verre de rétroviseur (08),
**caractérisé par** un contact électrique (01) selon l'une des revendications précédentes.

12. Rétroviseur selon la revendication 11, dans lequel le support de pistes conductrices (02) est disposé sur le côté du verre de rétroviseur (08) qui est tourné à l'opposé de l'ouverture, parallèlement à son verre de miroir (05).

13. Rétroviseur selon la revendication 11 ou 12, dans lequel le support de pistes conductrices (02) est conçu de manière à comporter un dispositif à circuit électronique constitué de composants électroniques (22, 23) disposés sur celui-ci et en contact électrique avec ses pistes conductrices.

14. Rétroviseur selon la revendication 11, 12 ou 13, dans lequel le rétroviseur est conçu sous la forme d'un rétroviseur extérieur destiné à être placé sur le côté d'un véhicule, dans lequel le verre de rétroviseur (08) à réglage électrique et le support de pistes conductrices (02) disposé sur le côté qui est tourné à l'opposé de l'ouverture ménagée dans le boîtier et qui est disposé sur celui-ci sont agencés de manière mobile conjointement et à pouvoir pivoter dans l'espace intérieur de boîtier autour d'au moins deux axes mathématiquement indépendants l'un de l'autre.

15. Rétroviseur selon la revendication 11, 12 ou 13, dans lequel le rétroviseur est conçu sous la forme d'un rétroviseur intérieur prévu pour être disposé dans un habitacle de véhicule et/ou sur une face intérieure d'un pare-brise de véhicule, dans lequel le verre de rétroviseur (08) à réglage électrique et le support de pistes conductrices (02) disposé sur le côté qui est tourné à l'opposé de l'ouverture ménagée dans le boîtier sont disposés conjointement de manière fixe et immobile dans l'espace intérieur de boîtier.
